(19) Europäisches Patentamt
European Patent Office
Office européen des brevets

(11) **EP 4 514 021 A1**

(12) **EUROPEAN PATENT APPLICATION**
published in accordance with Art. 153(4) EPC

(43) Date of publication:
**26.02.2025 Bulletin 2025/09**

(21) Application number: **23791369.4**

(22) Date of filing: **23.04.2023**

(51) International Patent Classification (IPC):
**H04W 72/12** (2023.01)

(52) Cooperative Patent Classification (CPC):
**H04L 5/00; H04W 72/12; H04W 72/1268; H04W 72/21**

(86) International application number:
**PCT/CN2023/090001**

(87) International publication number:
**WO 2023/202717 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.04.2022 CN 202210432278**

(71) Applicant: **Datang Mobile Communications Equipment Co., Ltd.**
**Beijing 100085 (CN)**

(72) Inventor: **HUANG, Qiuping**
**Beijing 100085 (CN)**

(74) Representative: **Cabinet Nony**
**11 rue Saint-Georges**
**75009 Paris (FR)**

(54) **UPLINK DATA TRANSMISSION METHOD AND TERMINAL DEVICE**

(57)    The present disclosure belongs to the technical field of communications. Disclosed in the present disclosure are an uplink data transmission method and a terminal device. The uplink data transmission method comprises: receiving, by a terminal device, SRS resource indication information, the SRS resource indication information is used for indicating a plurality of SRS resources; and, based on the SRS resource indication information, executing, by the terminal device, PUSCH transmission, wherein the PUSCH transmission comprises a first transport layer, and the first transport layer corresponds to at least two SRS resources of said SRS resources. By means of the plurality of SRS resources indicated by the SRS resource indication information, at least two SRS resources can be simultaneously transmitted on one transmission layer, thereby improving transmission efficiency.

```
┌─────────────────────────────────────────────────────┐
│                                                       │  ⟋ S201
│   receiving SRS resource indication information       │
│                                                       │
└─────────────────────────────────────────────────────┘
                          │
                          ▼
┌─────────────────────────────────────────────────────┐
│                                                       │  ⟋ S202
│  performing PUSCH transmission based on the SRS       │
│  resource indication information                      │
│                                                       │
└─────────────────────────────────────────────────────┘
```

**FIG. 2**

**Description**

**CROSS-REFERENCES TO RELATED APPLICATIONS**

The present disclosure claims the priority to Chinese patent application No. 202210432278.0 filed with China National Intellectual Property Administration on April 22, 2022, entitled "Uplink Data Transmission Method and Terminal Device", which is hereby incorporated by reference in its entirety.

**TECHNICAL FIELD**

The present disclosure relates to the field of communication, and in particular, to uplink data transmission methods and a terminal device.

**BACKGROUND**

Currently, in a procedure of transmitting uplink data through the physical uplink share channel (PUSCH) by terminal device, one transmission layer in the PUSCH corresponds to at most one sounding reference signal (SRS) resource, which results in low transmission efficiency.
How to improve the transmission efficiency of uplink data is an urgent problem to be solved.

**SUMMARY**

In order to solve problems mentioned above in the related art, embodiments of the present disclosure provide uplink data transmission methods and a terminal device, which may improve transmission efficiency of uplink data.
In a first aspect, some embodiments of the present disclosure provides an uplink data transmission method, including:

receiving sounding reference signal (SRS) resource indication information, the SRS resource indication information is used for indicating multiple SRS resources; and
performing physical uplink shared channel (PUSCH) transmission based on the SRS resource indication information, wherein the PUSCH transmission includes a first transmission layer; the first transmission layer corresponds to at least two SRS resources of the multiple SRS resources.

In a possible implementation, each of the at least two SRS resources has a same number of antenna ports.
In a possible implementation, in the multiple SRS resources, an index of antenna port of at least one SRS resource is determined based on a number of antenna ports of at least one other SRS resource.
In a possible implementation, a signaling carrying the SRS resource indication information includes an information field, the information field is used for indicating the multiple SRS resources; or
a signaling carrying the SRS resource indication information includes multiple information fields; each of the multiple information fields is used for indicating one SRS resource in the multiple SRS resources.
In a possible implementation, the SRS resource indication information includes SRS resource set indication information; and the SRS resource set indication information is used for indicating an SRS resource set corresponding to the multiple SRS resources.
In a possible implementation, the SRS resource indication information further includes first SRS resource indication information, and the first SRS resource indication information is used for indicating an SRS resource in the multiple SRS resources from an SRS resource set indicated by the SRS resource set indication information.
In a possible implementation, a first SRS resource and a second SRS resource in the at least two SRS resources have an association relationship; the first SRS resource and the second SRS resource are any two SRS resources in the at least two SRS resources;
the association relationship includes one or more of the following items:

the first SRS resource and the second SRS resource correspond to a same first parameter;
the first SRS resource and the second SRS resource correspond to different second parameters; or
the first SRS resource and the second SRS resource have a same index in respective SRS resource sets.

In a possible implementation, the SRS resource indication information includes first parameter indication information, and the first parameter indication information is used for indicating the first parameter corresponding to the at least two SRS resources.

In a possible implementation, performing the PUSCH transmission based on the SRS resource indication information includes:

determining a third SRS resource having an association relationship with at least one SRS resource in the multiple SRS resources indicated by the SRS resource indication information; and
performing PUSCH transmission based on at least one SRS resource indicated by the SRS resource indication information and the third SRS resource.

In a possible implementation, a transmission power used for each antenna port of SRSs of the at least two SRS resources is the same.

In a possible implementation, the SRS resource indication information indicates at least two SRS resources for the first transmission layer from a same SRS resource set; or
the SRS resource indication information indicates at least two SRS resources for the first transmission layer from multiple SRS resource sets.

In a possible implementation, in a case that the SRS resource indication information indicates at least two SRS resources for the first transmission layer from the multiple SRS resource sets, the SRS resource indication information indicates M SRS resources from the multiple SRS resource sets, and M is a positive integer.

In a possible implementation, in a case that the SRS resource indication information indicates at least two SRS resources for the first transmission layer from the multiple SRS resource sets, SRS resource sets of the multiple SRS resource sets are SRS resource sets with a same usage type.

In a possible implementation, in a case that the SRS resource indication information indicates at least two SRS resources for the first transmission layer from the multiple SRS resource sets, a fourth SRS resource and a fifth SRS resource in the at least two SRS resources are SRS resources with a same first parameter in different SRS resource sets; and the fourth SRS resource and the fifth SRS resource are any two SRS resources of the at least two SRS resources.

In a possible implementation, the first transmission layer corresponds to at least two ports, and each of the at least two ports corresponds to one SRS resource of the at least two SRS resources.

In a possible implementation, the at least two ports are PUSCH ports;
a first port of the at least two ports has a corresponding relationship with an antenna port of a first SRS resource of the at least two SRS resources; or a first port of the at least two ports is the same as an antenna port of a first SRS resource of the at least two SRS resources.

In a possible implementation, within the at least two ports, the index of at least one port is determined based on the number of PUSCH ports of at least one other port; or within the at least two ports, an index of at least one port is determined based on a number of antenna ports of SRS resource corresponding to at least one other port.

In a possible implementation, performing the PUSCH transmission based on the SRS resource indication information includes:
performing PUSCH transmission based on the SRS resource indication information and precoding indication information; the precoding indication information is used for indicating a precoding matrix corresponding to the first transmission layer from a codebook with a number of antenna ports being equal to a sum of a number of antenna ports of the at least two SRS resources.

In a possible implementation, performing the PUSCH transmission based on the SRS resource indication information includes:
performing PUSCH transmission based on the SRS resource indication information and precoding indication information; the precoding indication information being used for indicating a precoding matrix corresponding to each of the multiple SRS resources.

In a possible implementation, the precoding indication information includes first precoding indication information and second precoding indication information; the first precoding indication information is used for indicating a first precoding matrix corresponding to a first port or a sixth SRS resource; the second precoding indication information is used for indicating a second precoding matrix corresponding to a second port or a seventh SRS resource; the sixth SRS resource and the seventh SRS resource are SRS resources of the multiple SRS resources; the first port or the second port is an antenna port corresponding to the PUSCH transmission.

In a possible implementation, the first precoding indication information corresponds to a codebook with a number of antenna ports being equal to a number of antenna ports corresponding to the sixth SRS resource; the second precoding indication information corresponds to a codebook with a number of antenna ports being equal to a number of antenna ports corresponding to the seventh SRS resource.

In a possible implementation, the precoding indication information includes adjustment information of a pre-coding matrix corresponding to at least one port and/or at least one SRS resource, the at least one port is an antenna port of the antenna ports corresponding to the PUSCH transmission, and the at least one SRS resource is an SRS resource in the multiple SRS resources.

In a second aspect, some embodiments of the present disclosure provides an uplink data transmission method, performed by a network device. The method includes:

sending sounding reference signal (SRS) resource indication information to a terminal device, wherein the SRS resource indication information is used for indicating multiple SRS resources; and

receiving physical uplink shared channel (PUSCH) transmission transmitted based on the SRS resource indication information, wherein the PUSCH transmission includes a first transmission layer; the first transmission layer corresponds to at least two SRS resources of the multiple SRS resources.

In a possible implementation, each of the at least two SRS resources has a same number of antenna ports.

In a possible implementation, in the multiple SRS resources, an index of antenna port of at least one SRS resource is determined based on a number of antenna ports of at least one other SRS resource.

In a possible implementation, a signaling carrying the SRS resource indication information includes an information field, the information field is used for indicating the multiple SRS resources; or

a signaling carrying the SRS resource indication information includes multiple information fields; each of the multiple information fields is used for indicating one SRS resource in the multiple SRS resources.

In a possible implementation, the SRS resource indication information includes SRS resource set indication information; and the SRS resource set indication information is used for indicating an SRS resource set corresponding to the multiple SRS resources.

In a possible implementation, the SRS resource indication information further includes first SRS resource indication information, and the first SRS resource indication information is used for indicating an SRS resource in the multiple SRS resources corresponding to an SRS resource set indicated by the SRS resource set indication information.

In a possible implementation, a first SRS resource and a second SRS resource of the at least two SRS resources have an association relationship; the first SRS resource and the second SRS resource are any two SRS resources in the at least two SRS resources;

the association relationship includes one or more of the following items:

the first SRS resource and the second SRS resource correspond to a same first parameter;

the first SRS resource and the second SRS resource correspond to different second parameters; or

the first SRS resource and the second SRS resource have a same index in respective SRS resource sets.

In a possible implementation, the SRS resource indication information includes first parameter indication information, and the first parameter indication information is used for indicating a first parameter corresponding to the at least two SRS resources.

In a possible implementation, the PUSCH transmission is performed based on at least one SRS resource indicated by the SRS resource indication information and a third SRS resource; and the third SRS resource has an association relationship with at least one SRS resource in the multiple SRS resources indicated by the SRS resource indication information.

In a possible implementation, a transmission power used for each antenna port of SRSs of the at least two SRS resources is the same.

In a possible implementation, the SRS resource indication information indicates at least two SRS resources for the first transmission layer from a same SRS resource set; or

the SRS resource indication information indicates at least two SRS resources for the first transmission layer from multiple SRS resource sets.

In a possible implementation, in a case that the SRS resource indication information indicates at least two SRS resources for the first transmission layer from the multiple SRS resource sets, the SRS resource indication information indicates M SRS resources of the multiple SRS resource sets, and M is a positive integer.

In a possible implementation, in a case that the SRS resource indication information indicates at least two SRS resources for the first transmission layer from the multiple SRS resource sets, SRS resource sets in the multiple SRS resource sets are SRS resource sets with a same usage type.

In a possible implementation, in a case that the SRS resource indication information indicates at least two SRS resources for the first transmission layer from the multiple SRS resource sets, a fourth SRS resource and a fifth SRS resource of the at least two SRS resources are SRS resources with a same first parameter in different SRS resource sets; and the fourth SRS resource and the fifth SRS resource are any two SRS resources in the at least two SRS resources.

In a possible implementation, the first transmission layer corresponds to at least two ports, and each of the at least two ports corresponds to one SRS resource of the at least two SRS resources.

In a possible implementation, the at least two ports are PUSCH ports;

a first port of the at least two ports has a corresponding relationship with an antenna port of a first SRS resource of the at least two SRS resources; or a first port of the at least two ports is the same as an antenna port of a first SRS resource of the at least two SRS resources.

In a possible implementation, within the at least two ports, the index of at least one port is determined based on the number of PUSCH ports of at least one other port; or within the at least two ports, an index of at least one port is determined based on a number of antenna ports of SRS resource corresponding to at least one other port.

In a possible implementation, the method further includes:
transmitting precoding indication information; the precoding indication information being used for indicating a precoding matrix corresponding to the first transmission layer from a codebook with a number of antenna ports being equal to a sum of a number of antenna ports of the at least two SRS resources.

In a possible implementation, the method further includes:
sending precoding indication information; the precoding indication information is used for indicating a precoding matrix corresponding to each of the multiple SRS resources.

In a possible implementation, the precoding indication information includes first precoding indication information and second precoding indication information; the first precoding indication information is used for indicating a first precoding matrix corresponding to a first port or a sixth SRS resource; the second precoding indication information is used for indicating a second precoding matrix corresponding to a second port or a seventh SRS resource; the sixth SRS resource and the seventh SRS resource are SRS resources of the multiple SRS resources; the first port or the second port is an antenna port corresponding to the PUSCH transmission.

In a possible implementation, the first precoding indication information corresponds to a codebook with a number of antenna ports being equal to a number of antenna ports corresponding to the sixth SRS resource; the second precoding indication information corresponds to a codebook with a number of antenna ports being equal to a number of antenna ports corresponding to the seventh SRS resource.

In a possible implementation, the precoding indication information includes adjustment information of a precoding matrix corresponding to at least one port and/or at least one SRS resource, the at least one port is an antenna port of the antenna ports corresponding to the PUSCH transmission, and the at least one SRS resource is an SRS resource in the multiple SRS resources.

In a third aspect, some embodiments of the present disclosure provides a terminal device, comprising a memory, a transceiver and a processor;

the memory is used for storing computer programs;
the transceiver is used for sending and receiving data under control of the processor;
the processor is used for reading the computer programs in the memory and performing following operations: controlling the transceiver to receive sounding reference signal (SRS) resource indication information, the SRS resource indication information is used for indicating multiple SRS resources; and controlling the transceiver to perform physical uplink shared channel (PUSCH) transmission, wherein the PUSCH transmission includes a first transmission layer; the first transmission layer corresponds to at least two SRS resources of the multiple SRS resources.

In a possible implementation, the processor is used for:

determining a third SRS resource having an association relationship with at least one SRS resource in the multiple SRS resources indicated by the SRS resource indication information; and
controlling the transceiver to perform PUSCH transmission based on at least one SRS resource indicated by the SRS resource indication information and the third SRS resource.

In a possible implementation, the processor is used for:
controlling the transceiver to perform PUSCH transmission based on the SRS resource indication information and precoding indication information; the precoding indication information is used for indicating a precoding matrix corresponding to the first transmission layer from a codebook with a number of antenna ports being equal to a sum of a number of antenna ports of the at least two SRS resources.

In a possible implementation, the processor is used for:
controlling the transceiver to perform PUSCH transmission based on the SRS resource indication information and precoding indication information; the precoding indication information is used for indicating a precoding matrix corresponding to each of the multiple SRS resources.

In a fourth aspect, some embodiments of the present disclosure provides a network device, comprising a memory, a transceiver and a processor;

the memory is used for storing computer programs;

the transceiver is used for transmitting and receiving data under control of the processor;
the processor is used for reading the computer programs in the memory and performing following operations: sending sounding reference signal (SRS) resource indication information to a terminal device through the transceiver, the SRS resource indication information is used for indicating multiple SRS resources; and receiving physical uplink shared channel (PUSCH) transmission transmitted based on the SRS resource indication information through the transceiver, wherein the PUSCH transmission includes a first transmission layer; the first transmission layer corresponds to at least two SRS resources of the multiple SRS resources.

In a possible implementation, the PUSCH transmission is performed based on at least one SRS resource indicated by the SRS resource indication information and a third SRS resource; and the third SRS resource has an association relationship with at least one SRS resource in the multiple SRS resources indicated by the SRS resource indication information.

In a possible implementation, the processor is used for:
controlling the transceiver to send precoding indication information; the precoding indication information is used for indicating a precoding matrix corresponding to the first transmission layer from a codebook with a number of antenna ports being equal to a sum of a number of antenna ports of the at least two SRS resources.

In a possible implementation, the processor is used for:
controlling the transceiver to send precoding indication information; the precoding indication information is used for indicating a precoding matrix corresponding to each of the multiple SRS resources.

In a fifth aspect, some embodiments of the present disclosure provides a terminal device, the terminal device including:

a first receiving unit, configured to receive sounding reference signal (SRS) resource indication information, the SRS resource indication information is used for indicating multiple SRS resources; and
an uplink transmission unit, configured to perform physical uplink shared channel (PUSCH) transmission based on the SRS resource indication information, wherein the PUSCH transmission includes a first transmission layer; the first transmission layer corresponds to at least two SRS resources of the multiple SRS resources.

In a sixth aspect, some embodiments of the present disclosure provides a network device, the network device including:

a sending unit, configured to send sounding reference signal (SRS) resource indication information to a terminal device, the SRS resource indication information is used for indicating multiple SRS resources; and
a second receiving unit, configured to receive physical uplink shared channel (PUSCH) transmission transmitted based on the SRS resource indication information, wherein the PUSCH transmission includes a first transmission layer; the first transmission layer corresponds to at least two SRS resources of the multiple SRS resources.

In a seventh aspect, some embodiments of the present disclosure provides a computer-readable storage medium, the computer-readable storage medium stores computer programs, and the computer programs, when executed by a processor, performs any one of the uplink data transmission methods described in the first aspect or any one of the uplink data transmission methods described in the second aspect.

In uplink data transmission methods according the embodiments of the present disclosure, the terminal device receives SRS resource indication information, the SRS resource indication information indicates multiple SRS resources, and performs PUSCH transmission based on the SRS resource indication information, the PUSCH transmission includes a first transmission layer, and the first transmission layer corresponds to at least two SRS resources of the multiple SRS resources. Through the multiple SRS resources indicated by the SRS resource indication information, at least two SRS resources may be transmitted simultaneously in one transmission layer, and data transmission efficiency is improved.

## BRIEF DESCRIPTION OF THE DRAWINGS

In order to illustrate solutions in embodiments of the present disclosure more clearly, drawings used in descriptions of the embodiments will be briefly introduced below. The drawings in the following description are only some of the embodiments of the present disclosure, and other drawings may be obtained according to these drawings without any creative effort for those skilled in the art.

FIG. 1 is a schematic diagram of an application scenario of a communication network according to some embodiments of the present disclosure;
FIG. 2 is a schematic flow chart of an uplink data transmission method according to some embodiments of the present disclosure;

FIG. 3 is a schematic flow chart of another uplink data transmission method according to some embodiments of the present disclosure;

FIG. 4 is a schematic flow chart of another detailed uplink data transmission method according to some embodiments of the present disclosure;

FIG. 5 is a schematic flow chart of an uplink data transmission method according to some embodiments of the present disclosure;

FIG. 6 is a schematic diagram of an interaction between a base station and a terminal device according to some embodiments of the present disclosure.

FIG. 7 is a schematic structural diagram of a terminal device according to some embodiments of the present disclosure.

FIG. 8 is a schematic structural diagram of a network device according to some embodiments of the present disclosure.

FIG. 9 is a schematic structural diagram of a terminal device according to some embodiments of the present disclosure; and

FIG. 10 is a schematic structural diagram of a network device according to some embodiments of the present disclosure.

DETAILED DESCRIPTION

Specific implementations of the present disclosure are described in detail below in conjunction with the drawings It should be understood that the specific implementations described herein are only used to illustrate and explain the present disclosure, and are not used to limit the present disclosure.

In should be noted that "first" and "second" in embodiments of the present disclosure are used to distinguish similar objects and are not used to describe a particular order or sequence. "And/or" in the embodiments of the present disclosure describes an association relationship of associated objects, and indicates that there may be three kinds of relationships. For example, A and/or B can represent that A exists alone, A and B exist simultaneously, and B exists alone. Character "/" generally indicates that the associated objects have an "or" relationship.

"Determining B based on A" in the present disclosure means that the factor A should be considered when B is determined. It is not limited to "determining B based on A alone", but also includes: "determining B based on A and C", "determining B based on A, C and E", "determining C based on A, and further determining B based on C", etc. In addition, it may also include using A as a condition for determining B, for example, "when A satisfies a first condition, determining B using the first method", for another example, "when A satisfies a second condition, determining B", etc.; for still another example, "when A satisfies a third condition, determining B based on the first parameter" and so on. It may also be that A is used as a condition for determining B factor, for example, "when A satisfies the first condition, determining C using the first method, and further determining B based on C" and so on.

A network architecture and business scenarios described in the embodiments of present disclosure are intended to more clearly illustrate solutions of the embodiments of present disclosure, and do not make a limitation to the solutions according to the embodiments of present disclosure. It is known to those skilled in the art that the solutions according to the embodiments of present disclosure are also applicable to similar problems with the evolution of the network architecture and the emergence of new business scenarios.

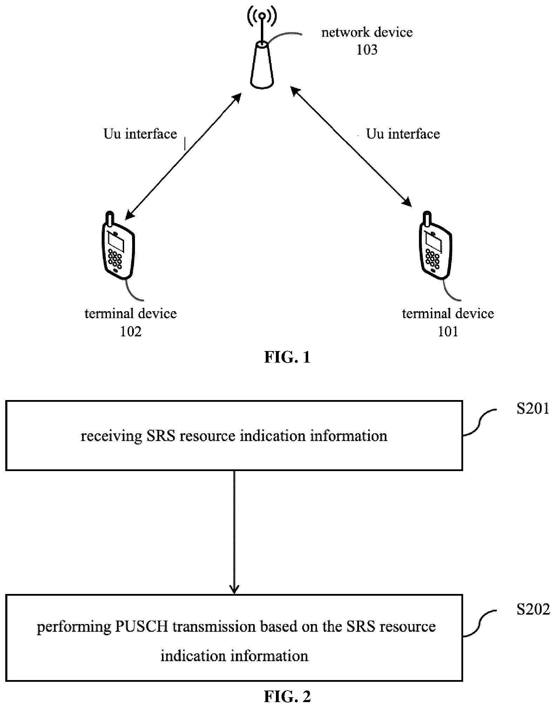

FIG. 1 is a schematic structural diagram of a communication network according to some embodiments of the present disclosure. A communication system includes a terminal device 101, a terminal device 102, and a network device 103. The terminal devices 101 and 102 may also be referred to as user equipment (UE), and the terminal devices 101 and 102 may be terminal devices such as mobile phones, tablet personal computers, laptop computers, personal digital assistants (PDA), mobile Internet devices (MID), wearable devices, or vehicle-mounted devices.

The network device 103 may be a base station or a core network. The base station may be a base station of 5G and later versions (e.g., gNB, 5G NR NB, etc.), or a base station in other communication systems (e.g., eNB, WLAN access point, or other access points, etc.). The base station may be referred to as a node B, an evolved node B, an access point, a base transceiver station (BTS), a radio base station, a radio transceiver, a basic service set (BSS), an extended service set (ESS), a node B, an evolved node B (eNB), a home node B, a home evolved node B, a WLAN access point, a WiFi node, or other appropriate terms in the field. As long as the same technical effect is achieved, the base station is not limited to a specific technical vocabulary. It should be noted that the embodiments of the present disclosure only take a base station in the NR system as an example, but do not limit the specific type of the base station. The base station may communicate with the terminal device 101 and the terminal device 102 under control of a base station controller, and the base station controller may be part of the core network or some base stations. The network device 103 in the following description may be take the base station as examples.

The terminal device 101 and the terminal device 102 may perform data transmission with the network device 103 through Uu interfaces.

Currently, in a procedure that the terminal device transmits uplink data through a physical uplink share channel (PUSCH), one transmission layer in the PUSCH corresponds to at most one sounding reference signal (SRS) resource, which results in low transmission efficiency.

Some embodiments of the present disclosure provides an uplink data transmission method, comprising: the terminal device receives SRS resource indication information, wherein the SRS resource indication information indicates multiple SRS resources, and performs PUSCH transmission based on the SRS resource indication information, the PUSCH transmission includes a first transmission layer, and the first transmission layer corresponds to at least two SRS resources of the multiple SRS resources. Through the multiple SRS resources indicated by the SRS resource indication information, at least two SRS resources may be transmitted simultaneously in one transmission layer, which may improve the transmission efficiency.

FIG. 2 is a schematic flow chart of an uplink data transmission method according to some embodiments of the present disclosure. The uplink data transmission method may be performed by a terminal device, for example, terminal devices shown in FIG. 1. As shown in FIG. 2, the method includes the following steps.

Step S201, receiving SRS resource indication information.

The terminal device receives the SRS resource indication information sent by a network device. The SRS resource indication information is used for indicating multiple SRS resources. Exemplarily, the SRS resource indication information may be carried in a radio resource control (RRC) signaling, a medium access control-control element (MAC CE) signaling or downlink control information (DCI).

Step S202, performing PUSCH transmission based on the SRS resource indication information.

The PUSCH transmission includes a first transmission layer; and the first transmission layer corresponds to at least two SRS resources of the multiple SRS resources. The terminal device performs PUSCH transmission based on the SRS resource indication information, which means that the terminal device transmits data or signals and other contents through the PUSCH based on the SRS resource indication information.

Exemplarily, the terminal device determines an antenna port corresponding to the PUSCH based on the SRS resource indication information, and performs PUSCH transmission based on the antenna port.

Exemplarily, the terminal device determines a precoding matrix corresponding to the PUSCH based on the SRS resource indication information, and performs PUSCH transmission based on the precoding matrix.

Exemplarily, the terminal device determines spatial filtering (i.e., a transmission beam) corresponding to the PUSCH based on the SRS resource indication information, and performs PUSCH transmission based on the spatial filtering.

Exemplarily, the terminal device determines SRS resources corresponding to the PUSCH transmission based on the SRS resource indication information. Alternatively, the terminal device determines one or more of the antenna ports, the precoding matrix, the spatial filtering, and transmission power corresponding to the PUSCH based on the determined SRS resources, and performs PUSCH transmission based on one or more of the antenna port, the precoding matrix, the spatial filtering, and the transmission power corresponding to the PUSCH.

In some embodiments, the PUSCH transmission includes multiple transmission layers, and the first transmission layer is part of the multiple transmission layers, for example, one transmission layer. In some embodiments, the first transmission layer is all transmission layers of the PUSCH transmission.

In some embodiments, the first transmission layer may correspond to at least two SRS resources of the multiple SRS resources. in a case that the first transmission layer is all transmission layers of the PUSCH transmission, all transmission layers of the PUSCH transmission correspond to at least two SRS resources.

In some embodiments, at least two SRS resources may also be multiple SRS resources indicated by the SRS resource indication information. That is, the first transmission layer may correspond to multiple SRS resources indicated by the SRS resource indication information, or the first transmission layer may correspond to all SRS resources indicated by the SRS resource indication information. in a case that the first transmission layer is all layers of PUSCH transmission, the transmission of all layers of PUSCH corresponds to all SRS resources indicated by the SRS resource indication information.

Exemplarily, it assumes that the SRS resource indication information indicates four SRS resources, the PUSCH transmission includes two transmission layers. In some embodiments, each of the above two transmission layers may correspond to two SRS resources, and in another embodiments, each of the above two transmission layers may correspond to two SRS resources of the four SRS resources respectively.

Alternatively, the first transmission layer of PUSCH transmission corresponding to at least two SRS resources includes one or more of the following items:

a bit stream of the first transmission layer of the PUSCH transmission is mapped to antenna ports of at least two SRS resources. For example, it can achieve the mapping of transmission layer to antenna ports through a precoding matrix; a precoding matrix used for transmitting the bit stream of the first transmission layer of the PUSCH transmission is determined based on SRS corresponding to at least two SRS resources;

spatial filtering (i.e., a transmission beam) used for transmitting the bit stream of the first transmission layer of the PUSCH transmission is determined based on an SRS corresponding to at least two SRS resources;

a transmission power used for transmitting the bit stream of the first transmission layer of the PUSCH transmission is determined based on a power control parameter corresponding to at least two SRS resources.

By corresponding one layer of PUSCH transmission to at least two SRS resources, the present embodiment may achieve mapping of more antenna ports based on at least two SRS resources including fewer antenna ports and then perform PUSCH transmission with more ports. In addition, achieving PUSCH transmission with more antenna ports through SRS resources with fewer antenna ports may enable the transmission of SRS having a higher transmission power, thereby improving the accuracy of obtaining uplink channel state information (CSI) and enhancing uplink coverage.

In a possible embodiment, each of the at least two SRS resources has a same number of antenna ports.

Exemplarily, in some embodiments, each of the at least two SRS resources for the first transmission layer has a same number of antenna ports. It assumes that the first transmission layer corresponds to two SRS resources, namely the first SRS resource and the second SRS resource, the number of antenna ports of the first SRS resource is equal to the number of antenna ports of the second SRS resource. For example, both the number of antenna ports of the first SRS resource and the number of antenna ports of the second SRS resource may be 4. In the present embodiment, by limiting each of the at least two SRS resources to have the same number of antenna ports, it may enable each antenna port of the at least two SRS resources having the same transmission power, thereby better obtaining the CSI information for each antenna port of the PUSCH.

In some other embodiments, each of the multiple SRS resources indicated by the SRS resource indication information has the same number of antenna ports. It assumes that the SRS resource indication information indicates ten SRS resources, each of the ten SRS resources has the same number of antenna ports.

In another possible embodiment, the number of antenna ports of the first SRS resource may not be equal to the number of antenna ports of the second SRS resource. For example, the number of antenna ports of the first SRS resource is 4 and the number of antenna ports of the second SRS resource is 2.

In a possible embodiment, in the multiple SRS resources, an index of antenna port of at least one SRS resource is determined based on a number of antenna ports of at least one other SRS resource.

In a possible embodiment, a index (index) of an antenna port of at least one SRS resource in the multiple SRS resources is determined based on the number of antenna ports of at least one other SRS resource in the multiple SRS resources.

The index in the above content may be understood as an index.

Exemplarily, taking a K-th SRS resource in the multiple SRS resources as an example, an index of an antenna port of the K-th SRS resource may be determined based on the number of antenna ports of one or more SRS resources of the multiple SRS resources, and any one or more SRS resources may be the SRS resource before the K-th SRS resource, or the SRS resource after the K-th SRS resource.

In some embodiments, the index of the antenna port of the K-th SRS resource may be determined based on the number of antenna ports of previous K-1 SRS resources, wherein K is a positive integer greater than 1.

Still taking the first SRS resource and the second SRS resource as an example, it assumes that the number of antenna ports of the first SRS resource is N, an index of the i-th antenna port of the second SRS resource is C+i+N-1, wherein C is a constant, for example, C=1000, that is, the index of the i-th antenna port of the second SRS resource is 1000+i+N-1.

In some embodiments, the multiple SRS resources are SRS resources indicated by the SRS resource indication information from an SRS resource set. An index of an antenna port of at least one SRS resource of an SRS resource set is determined based on the number of antenna ports of other SRS resource of the SRS resource set.

In a possible embodiment, the multiple SRS resources are SRS resources in the same SRS resource set, and an index of an antenna port of at least one SRS resource in the SRS resource set is determined based on a number of antenna ports of at least one another SRS resource other than the SRS resource in the SRS resource set. Exemplarily, the SRS resource set includes M SRS resources, wherein an index of i-th antenna port of the T-th SRS resource is

$$C+i+\sum_{t=1}^{T-1} m_t - 1$$ , wherein C is a constant, $m_t$ is the number of antenna ports of the t-th SRS resource, and T is a positive integer greater than 1. Alternatively, the index of the i-th antenna port of the first SRS resource in the SRS resource set is C+i-1.

In a possible embodiment, the multiple SRS resources are SRS resources in multiple SRS resource sets, and an index of an antenna port of SRS resources in at least one SRS resource set of the multiple SRS resource sets is determined based on a number of antenna ports of SRS resources in at least one another SRS resource set other than the SRS resource set in the multiple SRS resource sets. Exemplarily, the multiple SRS resource sets includes M SRS resource sets, wherein an index of i-th antenna port of one SRS resource in the T-th SRS resource set is $C + i + \sum_{t=1}^{T-1} m_t - 1$, wherein C is a constant, $m_t$ is the number of antenna ports of one SRS resource of the t-th SRS resource set, and T is a positive integer greater than 1. Alternatively, the index of the i-th antenna port of an SRS resource in a first SRS resource set of the multiple SRS resource sets is C+i-1.

With the solutions of the above embodiments, it may achieve differentiation of the antenna ports of multiple SRS resources, thereby better achieving that one PUSCH transmission layer corresponds to multiple SRS resources.

In a possible embodiment, a signaling carrying the SRS resource indication information includes an information field, the information field is used for indicating the multiple SRS resources; or a signaling carrying the SRS resource indication information includes multiple information fields; each of the multiple information fields is used for indicating one SRS resource in the multiple SRS resources. That is, the indication of multiple SRS resources may be implemented through one same information field, or the indication of multiple SRS resources is indicated by multiple information fields, and each information field indicates one SRS resource.

Alternatively, the information field is an SRS resource indication field.

In a possible embodiment, taking the SRS resource indication information being carried in the DCI as an example, the DCI may further include an information field, and the information field is used for indicating multiple SRS resources.

In a possible embodiment, the SRS resource indication information indicates the SRS resource from multiple SRS resource sets, and multiple SRS resources are indicated from one SRS resource set. In the present embodiment, alternatively, the information field is an SRS resource set indication field, and may also be used for indicating the SRS resource set. Alternatively, different SRS resources indicated by the SRS resource indication information are indicated from different SRS resource sets.

In a case that the SRS resource indication information indicates the SRS resource from the SRS resource set, the first SRS resource may be indicated from the first SRS resource set and the second SRS resource may be indicated from the second SRS resource set through the information field.

The information field may be understood as a field in the RRC signaling, a field in the MAC CE signaling, a field in the DCI signaling, or a parameter in the RRC signaling.

In another possible embodiment, taking the SRS resource indication information being carried in the DCI as an example, the DCI may include multiple information fields, and each of the multiple information fields is used for indicating one SRS resource.

Exemplarily, the DCI includes two information fields, the first information field indicates the first SRS resource, and the second information field indicates the second SRS resource.

In a case that the SRS resource indication information indicates the SRS resource from the SRS resource set, the SRS resource indication information may include two information fields, the first information field indicates the first SRS resource, and the second information field indicates the second SRS resource. The first SRS resource may be an SRS resource indicated by the first information field from the first SRS resource set, and the second SRS resource may be an SRS resource indicated by the second information field from the second SRS resource set.

In a possible embodiment, the SRS resource indication information includes SRS resource set indication information; and the SRS resource set indication information is used for indicating an SRS resource set corresponding to the multiple SRS resources. The SRS resource set corresponding to the multiple SRS resources may be one SRS resource set or may also be multiple SRS resource sets.

Taking a base station configuring two SRS resource sets for a terminal device as an example, an encoding example of the SRS resource set indication information is shown in Table 1.

Table 1

| Bit field mapped to index | SRS resource set indication information |
|---|---|
| 0 | First SRS resource set |
| 1 | Second SRS resource set |
| 2 | First SRS resource set and second SRS resource set |
| 3 | Reserved |

For example, the first SRS resource and the second SRS resource belong to the same SRS resource set. As shown in Table 1, in a case that the SRS resource set indication information has a value of 0, it indicates that both the first SRS resource and the second SRS resource are SRS resources in the first SRS resource set. In a case that the SRS resource set indication information has a value of 1, it indicates that both the first SRS resource and the second SRS resource are SRS resources in the second SRS resource set.

For another example, the first SRS resource and the second SRS resource belong to different SRS resource sets. As shown in Table 1, in a case that the SRS resource set indication information has a value of 2, it means that the first SRS resource is an SRS resource in the first SRS resource set, and the second SRS resource is an SRS resource in the second SRS resource set.

Exemplarily, the SRS resource indication information may further include first SRS resource indication information, and the first SRS resource indication information is used for indicating an SRS resource in the multiple SRS resources corresponding to an SRS resource set indicated by the SRS resource set indication information.

For example, the SRS resource indication information carried by the DCI includes the SRS resource set indication information and the first SRS resource indication information. The SRS resource set indication information indicates an SRS resource set corresponding to the PUSCH transmission, and the first SRS resource indication information is used for indicating an SRS resource in the multiple SRS resources corresponding to an SRS resource set indicated by the SRS resource set indication information.

In a possible embodiment, the SRS resource indication information includes at least a first information field and a second information field, the first information field indicates an SRS resource set, and the second information field indicates an SRS resource. The first information field here may be understood as the SRS resource set indication information, and the second information field may be understood as the first SRS resource indication information.

In a possible embodiment, the SRS resource indication information may indicate at least two SRS resources for the first transmission layer from a same SRS resource set. It may be understood that the first SRS resource and the second SRS resource are SRS resources in the same SRS resource set.

In another possible embodiment, the SRS resource indication information may indicate at least two SRS resources for the first transmission layer from multiple SRS resource sets. It may be understood that, taking at least two SRS resources being the first SRS resource and the second SRS resource as an example, the first SRS resource belongs to an SRS resource in the first SRS resource set, and the second SRS resource belongs to an SRS resource in the second SRS resource set.

Exemplarily, the SRS resource indication information indicates multiple SRS resource sets. In a case that each of the multiple SRS resource sets includes only one SRS resource, the SRS resource indication information indicates only one SRS resource from each SRS resource set.

Exemplarily, the SRS resource indication information indicates multiple SRS resource sets. In a case that each of the multiple SRS resource sets includes multiple SRS resource, the SRS resource indication information indicates multiple SRS resource from each SRS resource set.

Taking the SRS resource set including two SRS resources as an example, the two SRS resources are the first SRS resource 0 and the second SRS resource 1. An encoding example of the SRS resource indication information is shown in Table 2.

Table 2

| Bit field mapped to index | SRI(s), $N_{SRS} = 2$ |
|---------------------------|------------------------|
| 0 | 0 |
| 1 | 1 |
| 2 | 0, 1 |
| 3 | Reserved |

SRI is a sounding reference signal resource indicator (SRS resource indicator), i.e., the SRS resource indication information. As shown in Table 2, in a case that the SRS resource indication information has a value of 0, it indicates one SRS resource in the SRS resource set, i.e., the first SRS resource 0. In a case that the SRS resource indication information has a value of 1, it indicates one SRS resource in the SRS resource set, i.e., the second SRS resource 1. In a case that the SRS resource indication information has a value of 2, it indicates two SRS resources in the SRS resource set, i.e., the first SRS resource 0 and the second SRS resource 1.

In a possible embodiment, in a case that the SRS resource indication information indicates at least two SRS resources for the first transmission layer in multiple SRS resource sets, the SRS resource indication information indicates M SRS resources from the multiple SRS resource sets, and M is a positive integer.

Exemplarily, in some embodiments, in a case that M=10, the SRS resource indication information may indicate ten SRS resources from three SRS resource sets, five SRS resources out of the ten SRS resources may belong to one same SRS resource set, three SRS resources may belong to one same SRS resource set, and two SRS resources may belong to one same SRS resource set.

In a possible embodiment, in a case that the SRS resource indication information indicates at least two SRS resources in multiple SRS resource sets, the SRS resource indication information indicates M SRS resources from a first SRS resource set of the multiple SRS resource sets, and M is a positive integer.

For example, in a case that M=1, the first SRS resource set includes only one SRS resource, the current SRS resource indication information is the SRS resource set indication information.

For example, in a case that the SRS resource set configured by RRC signaling includes only one SRS resource, the SRS resource indication information is configuration information of the SRS resource set.

For another example, in a case that only one SRS resource set is configured by RRC signaling, the SRS resource indication information is configuration information of the SRS resource set.

In a possible embodiment, in a case that the SRS resource indication information indicates at least two SRS resources for the first transmission layer from multiple SRS resource sets, multiple SRS resource sets are SRS resource sets with a same usage type.

In a possible embodiment, in a case that the SRS resource indication information indicates multiple SRS resources, the multiple SRS resources are SRS resources with the same usage type.

In a 3GPP NR (New Radio) system, a PUSCH transmission mode may include codebook-based PUSCH transmission and non-codebook-based PUSCH transmission.

For example, in a case that PUSCH is codebook-based PUSCH, the SRS resource is an SRS resource with an usage type of codebook, or an SRS resource in an SRS resource set with an usage type of codebook, and the above SRS resource set is an SRS resource set with an usage type of codebook. That is, in a case that PUSCH transmission is codebook-based transmission, the SRS resource set is an SRS resource set with usage configured as"codebook".

For another example, in a case that PUSCH is non-codebook-based PUSCH, the above SRS resource is an SRS resource with an usage type of non-codebook, or an SRS resource in an SRS resource set with an usage type of non-codebook, and the above SRS resource set is an SRS resource set with an usage type of non-codebook. That is, in a case that PUSCH transmission is non-codebook-based transmission, the SRS resource set is an SRS resource set with usage configured as "nonCodebook".

Alternatively, the SRS resource set is an SRS resource set with the same usage type, which may be configured by a parameter used for configuring an SRS resource set list. For example, the SRS resource set is an SRS resource set with the same usage type included in SRS resource sets configured by the parameter srs-ResourceSetToAddModList. For another example, the SRS resource set is an SRS resource set with the same usage type included in SRS resource sets configured by the parameter srs-ResourceSetToAddModListDCI-0-2.

In a possible embodiment, in a case that the SRS resource indication information indicates at least two SRS resources for the first transmission layer from multiple SRS resource sets, a fourth SRS resource and a fifth SRS resource of the at least two SRS resources are SRS resources with a same first parameter in different SRS resource sets, and the fourth SRS resource and the fifth SRS resource are any two SRS resources in the at least two SRS resources.

The first parameter is a parameter used for indicating the association relationship between the SRS resources. It may be understood that SRS resources with the same first parameter have an association relationship.

Exemplarily, taking the first parameter identifier being a sounding reference signal resource indication index (SRSpoolIndex) as an example, SRS resources with the same SRSpoolIndex value are SRS resources having an association relationship.

In a case that an SRS resource set includes multiple SRS resources, each SRS resource in the SRS resource set has different first parameters, which means that each SRS resource in the same SRS resource set has different first parameters.

In a possible embodiment, in a case that the SRS resource indication information indicates multiple SRS resources, all SRS resources have an association relationship. It assumes that at least two SRS resources include a first SRS resource and a second SRS resource, which means that the first SRS resource and the second SRS resource are any two SRS resources in at least two SRS resources, the first SRS resource and the second SRS resource are SRS resources indicated from SRS resources having an association relationship.

The association relationship may include one or more of the following items.

(1) A first association relationship: the first SRS resource and the second SRS resource are SRS resources in the same SRS resource set.

The first SRS resource and the second SRS resource are included in the same SRS resource set, and the SRS resource indication information may indicate the first SRS resource and the second SRS resource from the same SRS resource set.

(2) A second association relationship: the first SRS resource and the second SRS resource have a same index in respective SRS resource sets.

Exemplarily, the SRS resources are sorted based on a size of the ID in each SRS resource set, and the first SRS resource and the second SRS resource have the same index in an ascending order of ID, or the first SRS resource and the second SRS resource have the same index in a descending order of ID.

Exemplarily, the first SRS resource and the second SRS resource have the same index in which they are configured in their respective SRS resource sets.

Exemplarily, the SRS resource indication information indicates the index of the SRS resource, and the PUSCH transmission corresponds to SRS resources with the same index in multiple SRS resource sets.

(3) A third association relationship: the first SRS resource and the second SRS resource correspond to the same first parameter.

The first parameter is a parameter used for indicating the association relationship between the SRS resources.

Exemplarily, in a case that the first SRS resource and the second SRS resource correspond to the same first parameter, the SRS resource indication information includes the first parameter indication information, and the first parameter indication information is used for indicating at least two SRS resources. It may also be understood that the SRS resource indication information includes first parameter indication information, and the first parameter indication information is used for indicating a first parameter corresponding to the at least two SRS resources.

Exemplarily, the first SRS resource and the second SRS resource are SRS resources corresponding to the same first parameter in the same SRS resource set.

Exemplarily, the first SRS resource and the second SRS resource are SRS resources corresponding to the same first parameter in different SRS resource sets. Each SRS resource in the same SRS resource set has different first parameters.

Exemplarily, taking the first parameter identifier being a sounding reference signal resource indication index (SRSpoolIndex) as an example, SRS resources with the same SRSpoolIndex value are SRS resources having an association relationship. The SRS resource indication information indicates one SRS resource, or multiple SRS resources having an association relationship.

It may be understood that the SRS resource indication information only indicates one SRS resource, but other SRS resources having the same first parameter as the SRS resource are not indicated by the SRS resource indication information, and are needed in PUSCH transmission, PUSCH transmission may be performed based on the following method.

The first parameter may be configured in a configuration parameter of the SRS resource, and the first parameter may also be configured in a configuration parameter of the SRS resource set.

In a case that the SRS resource set is configured with the first parameter, all SRS resources in the SRS resource set correspond to the same first parameter.

(4) A fourth association relationship: SRS resources configured with the same first parameter may be indicated at the same time. That is, PUSCH transmission may correspond to SRS resources configured with the same first parameter.

(5) A fifth association relationship: Antenna ports corresponding to the SRS resources configured with the same first parameter correspond to different ports of the multiple ports. Alternatively, PUSCH transmission corresponds to multiple antenna ports, and the SRS resources configured with the same first parameter correspond to different ports of the multiple antenna ports.

Alternatively, the association relationship includes that the first SRS resource and the second SRS resource correspond to different second parameters.

The second parameter may also be a parameter used for indicating the association relationship between the SRS resources. It may be understood that SRS resources with different second parameters have an association relationship.

For example, the second parameter may be a panel, and the first SRS resource and the second SRS resource correspond to different panels. The first parameter and the second parameter in the above content may be the same parameter or different parameters.

Alternatively, the terminal determines an SRS resource corresponding to the PUSCH transmission based on the association relationship and the SRS resource indication information.

Exemplarily, the SRS resource indication information indicates an SRS resource having a first parameter value of 1, then the SRS resources corresponding to the PUSCH transmission are all SRS resources having the first parameter value of 1.

Alternatively, the terminal device determines one or more of the antenna port, the precoding matrix, the spatial filtering, and transmission power corresponding to the PUSCH based on the determined SRS resources, and performs PUSCH transmission based on one or more of the antenna port, the precoding matrix, the spatial filtering, and the transmission power corresponding to the PUSCH.

In a possible embodiment, a third SRS resource having an association relationship with at least one SRS resource in the multiple SRS resources indicated by the SRS resource indication information is determined; and the PUSCH transmission is performed based on at least one SRS resource indicated by the SRS resource indication information and the third SRS resource.

In a possible implementation, the SRS resource indication information only indicates the first SRS resource, and the terminal device determines an SRS resource corresponding to the PUSCH based on the association relationship between the SRS resource indication information and other SRS resources. For example, a third SRS resource having an association relationship with the first SRS resource indicated by the SRS resource indication information is determined; and the PUSCH transmission is performed based on the first SRS resource indicated by the SRS resource indication information and the third SRS resource.

In a possible embodiment, each antenna port for transmitting at least two SRS resources transmits SRS using the same transmission power; or, each antenna port of the SRS corresponding to at least two SRS resources transmits SRS using the same transmission power.

Alternatively, in a case that at least two SRS resources have an association relationship, the transmission power of the antenna ports of at least two SRS resources is the same.

In a possible embodiment, the first transmission layer corresponds to at least two ports, and each of the at least two ports corresponds to one SRS resource of the at least two SRS resources.

Exemplarily, there are two ports in the first transmission layer, namely a first port and a second port respectively. The first port corresponds to the first SRS resource, and the second port corresponds to the second SRS resource.

The first port may include one or more ports, and the second port may include one or more ports.

It should be noted that the port in present disclosure may also be referred to as an antenna port. An antenna port included in the SRS resource may also be referred to as an SRS port, an SRS antenna port, etc. An antenna port of the PUSCH may also be referred to as a PUSCH port, a PUSCH antenna port, etc. In present disclosure, the SRS resource corresponds to M SRS ports, which may be understood as that the SRS resource is configured with M SRS ports, or the SRS resource includes M SRS ports, or the M SRS ports of the SRS resource.

It should be noted that the concepts of the first port and the second port in present disclosure may be understood as a port set, and a port set may include one or more ports.

The first port and the second port may be PUSCH ports or SRS ports.

In a case that the first port and the second port are SRS ports, a first SRS port corresponding to one or more layers of PUSCH corresponds to the first SRS resource, and the second SRS port corresponds to the second SRS resource.

In a case that the first port and the second port are PUSCH ports, the first PUSCH port corresponding to one or more transmission layers of PUSCH corresponds to the first SRS resource, and the second PUSCH port corresponds to the second SRS resource.

Alternatively, in a case that the first port and the second port may be PUSCH ports, the first port of at least two ports and the antenna port of the first SRS resource of at least two SRS resources have a corresponding relationship; or, the first port and an antenna port of the first SRS resource of at least two SRS resources are the same port, and the second port and an antenna port of the second SRS resource of at least two SRS resources are the same port.

Alternatively, the PUSCH port and the SRS port are the same port. The first PUSCH port and an antenna port of the first SRS resource are the same port, and the second PUSCH port and an antenna port of the second SRS resource are the same port.

In a possible embodiment, within at least two ports, an index of at least one port is determined based on a number of PUSCH ports of at least one other ports; or within at least two ports, an index of at least one port is determined based on a number of antenna ports of an SRS resource corresponding to at least one other ports.

An index of at least one port in the above content may be understood as a index of at least one port.

Alternatively, an index of at least one antenna port in at least two ports is determined based on the number of PUSCH ports of at least one other two ports.

Specifically, an index of the PUSCH port of the K-th antenna port in at least two ports is determined based on the number of PUSCH ports of at least one other two ports.

Wherein K is a positive integer greater than 1, and the at least one other port is a port in at least two ports other than the K-th port.

Exemplarily, taking the first port and the second port as an example, the first port includes N antenna ports, and the index of the i-th antenna port of the second port is C+i+N, wherein C may be a constant of 1000.

Alternatively, an index of at least one antenna port in at least two ports is determined based on the number of antenna ports of an SRS resource corresponding to at least one other port.

Specifically, an index of the PUSCH port of the K-th port in at least two ports is determined based on the number of antenna ports of an SRS resource corresponding to at least one other port. wherein K is a positive integer greater than 1, and the at least one other port is a port in at least two ports other than the K-th port.

Exemplarily, taking the first port and the second port as an example, the first SRS resource is configured with N antenna ports, and an index of the i-th antenna port of the second port is C+i+N, wherein C may be a constant of 1000.

It should be noted that in the embodiment of the present disclosure, taking only the first port and the second port as examples, the SRS resource indication information in the above content may indicate multiple resources. In a case that the SRS resource indication information indicates ten resources, if PUSCH transmission needs to be performed through the first transmission layer, it can configure 10 ports in the first transmission, which means from the first port to the tenth port. The first port may include multiple ports, and the tenth port may include multiple ports. The first port corresponds to a first SRS resource, the second port corresponds to a second SRS resource, and the tenth port corresponds to a tenth SRS resource.

Alternatively, an index of antenna ports of the M-th SRS resource may be determined based on the number of antenna ports configured for previous M-1 SRS resources.

Exemplarily, it assumes that the number of antenna ports configured for the P-th SRS resource is $m_p$, an index of the i-th antenna port of the M-th SRS resource is $1000 + i + \sum_{P=1}^{M-1} m_P$.

Alternatively, an index of an M-th port corresponding to the PUSCH may be determined based on the number of antenna ports configured for the previous M-1 SRS resources.

Exemplarily, it assumes that the number of antenna ports configured for the P-th SRS resource is $m_p$, an index of the i-th antenna port of the M-th port is $1000 + i + \sum_{P=1}^{M-1} m_P$.

In a possible embodiment, the uplink data transmission method provided in the embodiment of the present disclosure may be a codebook-based PUSCH transmission, or a non-codebook PUSCH transmission.

In codebook-based PUSCH transmission, the terminal device may determine a precoder corresponding to the PUSCH transmission based on an SRI, a transmission pre-coding matrix indicator (TPMI) and a transmission rank.

Alternatively, when the PUSCH transmission is codebook-based transmission, SRI only exists when an SRS resource set obtained by channel state information (CSI) of the codebook-based PUSCH includes multiple SRS resources. Alternatively, when the PUSCH transmission is non-codebook-based transmission, SRI only exists when an SRS resource set obtained by CSI of the non-codebook-based PUSCH includes multiple SRS resources.

In the present disclosure, the SRS resource set obtained by the CSI of the codebook-based PUSCH may refer to an SRS resource set with usage type of codebook. The SRS resource set obtained by the CSI of the non-codebook-based PUSCH may refer to an SRS resource set with usage type of non-codebook.

When the SRS resource set obtained by the CSI of the codebook-based PUSCH includes multiple SRS resources, which means that SRI exists, TPMI indicates a precoder corresponding to each transmission layer of PUSCH, and the precoder corresponds to an SRS resource indicated by SRI, and is selected from an uplink codebook with the number of antenna ports being equal to the number of antenna ports configured for the SRS resource indicated by SRI.

When the SRS resource set obtained by the CSI of the codebook-based PUSCH includes only one SRS resource, which means that SRI does not exist, a precoder indicated by TPMI corresponding to each transmission layer of PUSCH corresponds to the SRS resource, and is selected from an uplink codebook with the number of antenna ports being equal to the number of antenna ports configured for the SRS resource.

Alternatively, at least two ports corresponding to the first transmission layer are antenna ports to which the transmission layer of the PUSCH is mapped after precoding.

Exemplarily, the first transmission layer includes a first port and a second port, and the first port and the second port are antenna ports to which the first transmission layer of the PUSCH is mapped after precoding.

The PUSCH transmission layer is mapped to the first port and the second port through the precoding matrix W. It assumes that the first port is $p_0, ... , p_{s1}$, and the second port is $p_{s1+1}, ..., p_{s1+s2-1}$, a precoding matrix W with a dimension of $(s1+s2) \times v$ may be used for mapping data $[\gamma^{(0)}(i) ...... \gamma^{(v-1)}(i)]^T$ in the i-th symbol of v layers of PUSCH to the antenna port through the following formula. The specific formula is as follows:

$$
\begin{bmatrix} z^{(p_0)}(i) \\ ... \\ z^{(p_{s1+s2-1})}(i) \end{bmatrix} = W \begin{bmatrix} y^{(0)}(i) \\ ... \\ y^{(v-1)}(i) \end{bmatrix}
$$

Alternatively, a number of antenna ports of multiple SRS resources are the same.

Alternatively, multiple SRS resources are indicated by different information fields.

Alternatively, precoding matrices corresponding to multiple SRS resources are indicated by different precoding indication information.

Alternatively, all v layers of PUSCH may be mapped to a total of $\rho$ antenna ports of X SRS resources through the precoding matrix W.

Alternatively, the precoding matrix W consists of X matrices, and each of X matrices corresponds to a group of antenna ports or an SRS resource. For example,

$$
W = \begin{bmatrix} W_1 \\ \vdots \\ W_X \end{bmatrix}
$$

, wherein $W_1 \cdots, W_X$ represent precoding matrices corresponding to X SRS resources or X groups of antenna ports, respectively.

v, X and ρ in the above embodiment are all positive integers. For example, X=2, ρ=8.

In a possible implementation, in step S202, the terminal device may perform PUSCH transmission based on the SRS resource indication information and precoding indication information.

wherein the precoding indication information is received by the terminal device. The terminal device may receive the precoding indication information before receiving the SRS resource indication information; the terminal device may also receive the precoding indication information after receiving the SRS resource indication information; the terminal device may also receive the precoding indication information while receiving the SRS resource indication information.

Alternatively, the terminal device determines the precoding matrix for the PUSCH based on the number of antenna ports included in the SRS resource indicated by the SRS resource indication information and the precoding indication information.

Alternatively, when the SRS resource indication information indicates one SRS resource, the precoding matrix is determined from a codebook with a number of antenna ports being equal to the number of antenna ports configured for the SRS resource based on the precoding indication information.

Alternatively, when the SRS resource indication information indicates multiple SRS resources, the precoding matrix is determined from a codebook with a number of antenna ports being equal to a sum of the number of antenna ports configured for multiple SRS resources based on the precoding indication information.

Alternatively, the precoding indication information at least includes first precoding indication information and second precoding indication information, the first precoding indication information indicates a first precoding matrix corresponding to the first port, and the second precoding indication information indicates a second precoding matrix corresponding to the second port.

Exemplarily, a first precoding matrix is a precoding matrix indicated from a codebook with a number of antenna ports being equal to a number of antenna ports configured for the first SRS resource, and a second precoding matrix is a precoding matrix indicated from a codebook with a number of antenna ports being equal to a number of antenna ports configured for the second SRS resource.

It may be understood that the terminal device determines a first precoding matrix based on the first precoding indication information and a codebook with a number of antenna ports being equal to a number of antenna ports configured for the first SRS resource, and the terminal device determines a second precoding matrix based on the second precoding indication information and a codebook with a number of antenna ports being equal to a number of antenna ports configured for the second SRS resource.

Exemplarily, the first precoding indication information is used for indicating a first precoding matrix from a codebook with a number of antenna ports being equal to a number of antenna ports corresponding to a first SRS resource. The second precoding indication information is used for indicating a second precoding matrix from a codebook with a number of antenna ports being equal to a number of antenna ports corresponding to a second SRS resource.

It may be understood that the terminal device determines the first precoding matrix from a codebook with a number of antenna ports being equal to a number of antenna ports corresponding to the first SRS resource based on the first precoding indication information, and the terminal device determines the second precoding matrix from a codebook with a number of antenna ports being equal to a number of antenna ports corresponding to the second SRS resource based on the second precoding indication information.

Alternatively, the first precoding matrix is determined based on the SRS corresponding to the first SRS resource, and the second precoding matrix is determined based on the SRS corresponding to the second SRS resource.

Alternatively, the precoding indication information is used for indicating a precoding matrix from a codebook with a number of antenna ports being equal to a sum of a number of antenna ports configured for all antenna ports corresponding to the PUSCH.

Alternatively, the precoding indication information is used for indicating a precoding matrix corresponding to a first transmission layer from a codebook with a number of antenna ports being equal to a sum of a number of antenna ports of the at least two SRS resources.

Alternatively, a precoding matrix corresponding to an SRS resource is a precoding matrix mapped to antenna ports corresponding to the SRS resource.

Alternatively, the precoding indication information is used for indicating a precoding matrix from a codebook with a number of antenna ports being equal to the sum of the number of antenna ports configured for the first SRS resource and the number of antenna ports configured for the second SRS resource.

Alternatively, the precoding indication information further includes adjustment information of a precoding matrix corresponding to at least one port and/or at least one SRS resource, the at least one port is an antenna port of the antenna ports corresponding to the PUSCH transmission, and the at least one SRS resource is an SRS resource in the multiple SRS resources. Alternatively, the adjustment information includes at least one of the following information: phase adjustment information or amplitude adjustment information.

Alternatively, the precoding matrices corresponding to multiple SRS resources are indicated by the precoding indication information respectively. The precoding matrix corresponding to any one SRS resource is a precoding matrix selected from a codebook corresponding to the number of antenna ports included in the SRS resource.

Alternatively, the precoding indication information may be carried by one or more of RRC signaling, MAC-CE signaling or DCI signaling.

Take the precoding indication information being carried by DCI signaling as an example. Alternatively, the precoding indication information is carried by a precoding matrix and/or a transmission layer number indication field in the DCI signaling. Alternatively, the first precoding indication information and the second precoding indication information are carried by different information fields. For example, the first precoding indication information is carried by the precoding matrix and/or the transmission layer number indication field in the DCI signaling, and the second precoding indication information is carried by the precoding matrix and/or the transmission layer number indication field in the DCI signaling.

Alternatively, information fields carrying the precoding indication information has a corresponding relationship with information fields carrying the SRI and/or an SRS resource indicated by the SRI.

Alternatively, the corresponding relationship is that the information fields carrying the precoding indication information is in one-to-one correspondence with the information fields carrying the SRI. That is, one SRS resource indication information corresponds to one precoding indication information. Alternatively, one SRS resource corresponds to one precoding matrix and the number of transmission layers.

Alternatively, the corresponding relationship is that the information fields carrying the precoding indication information is in one-to-one correspondence with the SRS resource indicated by the SRI. That is, one SRS resource corresponds to one precoding indication information. Alternatively, one SRS resource corresponds to one precoding matrix and the number of transmission layers.

Alternatively, the corresponding relationship is that multiple information fields carrying precoding indication information correspond to one information field carrying SRI, and each of the multiple information fields corresponds to one SRS resource indicated by the SRI.

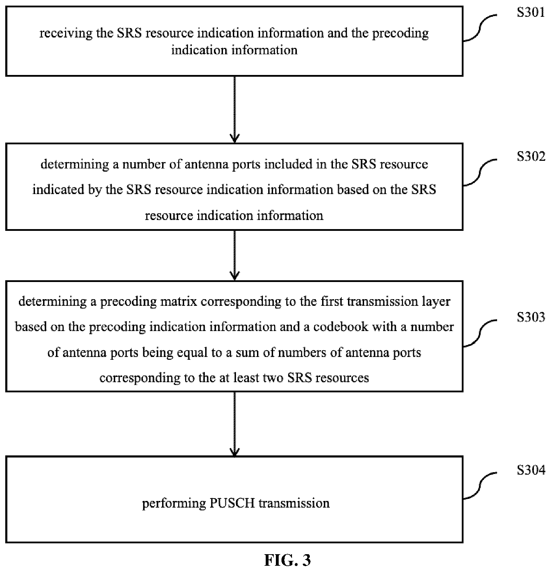

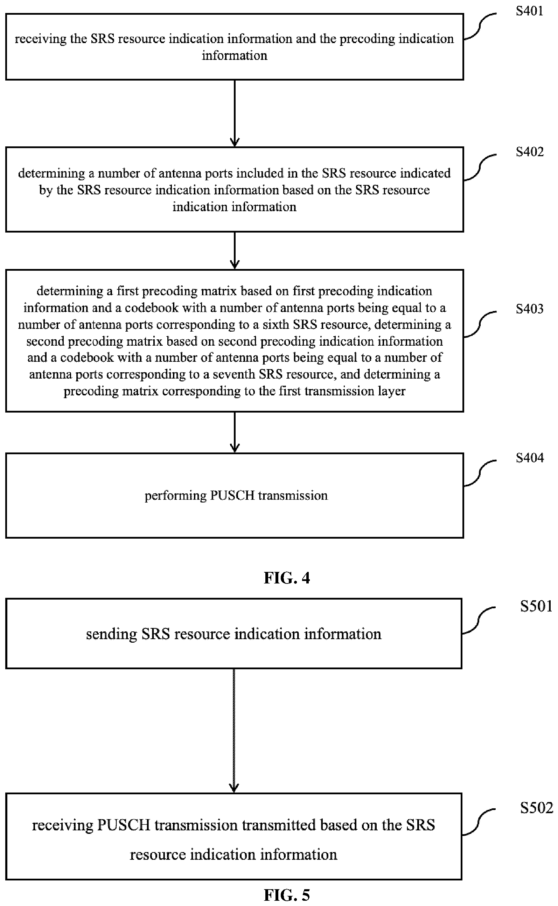

Based on the two embodiments of FIG. 3 and FIG. 4, performing, by the terminal device, PUSCH transmission based on the received SRS resource indication information and precoding indication information is explained and described below.

FIG. 3 shows a detailed flow diagram of uplink data transmission, which is performed by a terminal device. A first transmission layer in the process of performing PUSCH transmission is taken as an example in the following steps. The steps are as follows:

Step S301, receiving the SRS resource indication information and the precoding indication information.

Step S302: determining a number of antenna ports included in the SRS resource indicated by the SRS resource indication information based on the SRS resource indication information.

Step S303: determining a precoding matrix corresponding to the first transmission layer based on the precoding indication information and a codebook with a number of antenna ports being equal to a sum of a number of antenna ports of the at least two SRS resources.

Step S304: performing PUSCH transmission.

FIG. 4 shows another detailed flow diagram of uplink data transmission, which is performed by a terminal device. A first transmission layer in the process of performing PUSCH transmission is taken as an example in the following steps. The steps are as follows:

Step S401, receiving the SRS resource indication information and the precoding indication information.

The SRS resource indication information indicates multiple SRS resources. The precoding indication information includes first precoding indication information and second precoding indication information, the first precoding indication information is used for indicating a first precoding matrix corresponding to a first port or a sixth SRS resource, the second precoding indication information is used for indicating a second precoding matrix corresponding to a second port or a seventh SRS resource, the sixth SRS resource and the seventh SRS resource are SRS resources of the multiple SRS resources; the first port or the second port is an antenna port corresponding to the PUSCH transmission.

Step S402: determining a number of antenna ports included in the SRS resource indicated by the SRS resource indication information based on the SRS resource indication information.

Step S403: determining a first precoding matrix based on first precoding indication information and a codebook with a number of antenna ports being equal to a number of antenna ports corresponding to a sixth SRS resource, determining a second precoding matrix based on second precoding indication information and a codebook with a number of antenna ports being equal to a number of antenna ports corresponding to a seventh SRS resource, and determining a precoding matrix corresponding to the first transmission layer.

Step S04: performing PUSCH transmission.

Through uplink data transmission methods above, the terminal device receives SRS resource indication information, the SRS resource indication information indicates multiple SRS resources; and performs PUSCH transmission based on the SRS resource indication information, the PUSCH transmission includes a first transmission layer, and the first transmission layer corresponds to at least two SRS resources of the multiple SRS resources. Through the multiple SRS resources indicated by the SRS resource indication information, at least two SRS resources may be transmitted simultaneously in one transmission layer, thereby improving transmission efficiency.

Furthermore, the PUSCH transmission may include multiple transmission layers, and each transmission layer may transmit multiple SRS resources, thereby further improving the transmission efficiency.

Based on the same inventive concept as the method embodiment performed by the above-mentioned terminal device, the embodiment of the present disclosure further provides an uplink data transmission method, which is performed by a network device. The network device may be understood as a base station. FIG. 5 shows a flow chart of an uplink data transmission method, and the steps are as follows.

Step S501: sending sounding reference signal (SRS) resource indication information to a terminal device.

The SRS resource indication information is used for indicating multiple SRS resources.

Step S502: receiving PUSCH transmission transmitted based on the SRS resource indication information.

The PUSCH transmission includes a first transmission layer; and the first transmission layer corresponds to at least two SRS resources of the multiple SRS resources.

In a possible embodiment, each of the at least two SRS resources has a same number of antenna ports.

In a possible embodiment, in the multiple SRS resources, an index of antenna port of at least one SRS resource is determined based on a number of antenna ports of at least one other SRS resource.

In a possible embodiment, a index (index) of an antenna port of at least one SRS resource in the multiple SRS resources is determined based on the number of antenna ports of at least one other SRS resource in the multiple SRS resources.

The index in the above content may be understood as an index.

Exemplarily, taking a K-th SRS resource in the multiple SRS resources as an example, an index of an antenna port of the K-th SRS resource may be determined based on the number of antenna ports of one or more SRS resources of the multiple SRS resources, and any one or more SRS resources here may be the SRS resource before the K-th SRS resource, or the SRS resource after the K-th SRS resource.

In some embodiments, the index of the antenna port of the K-th SRS resource may be determined based on the number of antenna ports of first K-1 SRS resources, wherein K is a positive integer greater than 1.

Still taking the first SRS resource and the second SRS resource as an example, it assumes that the number of antenna ports of the first SRS resource is N, an index of the i-th antenna port of the second SRS resource is C+i+N-1, wherein C is a constant, for example, C=1000, that is, the index of the i-th antenna port of the second SRS resource is 1000+i+N-1.

In some embodiments, the multiple SRS resources are SRS resources indicated by the SRS resource indication information from an SRS resource set. An index of an antenna port of at least one SRS resource in an SRS resource set is determined based on the number of antenna ports of other SRS resource in the SRS resource set.

In a possible embodiment, the multiple SRS resources are SRS resources in the same SRS resource set, and an index of an antenna port of at least one SRS resource in the SRS resource set is determined based on a number of antenna ports of at least one another SRS resource other than the SRS resource in the SRS resource set. Exemplarily, the SRS resource set includes M SRS resources, wherein an index of i-th antenna port of the T-th SRS resource is $C+i+\sum_{t=1}^{T-1} m_t-1$, wherein C is a constant, $m_t$ is the number of antenna ports of the t-th SRS resource, and T is a positive integer greater than 1. Alternatively, the index of the i-th antenna port of the first SRS resource in the SRS resource set is C+i-1.

In a possible embodiment, the multiple SRS resources are SRS resources in multiple SRS resource sets, and an index of an antenna port of SRS resources in at least one SRS resource set of the multiple SRS resource sets is determined based on a number of antenna ports of SRS resources in at least one another SRS resource set of the multiple SRS resource sets other than the SRS resource set. Exemplarily, the multiple SRS resource sets includes M SRS resource sets, wherein an index of i-th antenna port of one SRS resource in the T-th SRS resource set is $C+i+\sum_{t=1}^{T-1} m_t-1$, wherein C is a constant, $m_t$ is the number of antenna ports of one SRS resource of the t-th SRS resource set, and T is a positive integer greater than 1. Alternatively, the index of the i-th antenna port of an SRS resource in a first SRS resource set of the multiple SRS resource sets is C+i-1.

Through the solutions of the above embodiments, it can achieve differentiation of the antenna ports of multiple SRS resources, thereby better achieving that one PUSCH transmission layer corresponds to multiple SRS resources.

In a possible embodiment, a signaling carrying the SRS resource indication information includes an information field, the information field is used for indicating the multiple SRS resources; or a signaling carrying the SRS resource indication information includes multiple information fields; each of the multiple information fields is used for indicating one SRS resource in the multiple SRS resources. That is, the indication of multiple SRS resources may be implemented through the same information field, or the indication of multiple SRS resources is indicated by multiple information fields, and each information field indicates one SRS resource.

Alternatively, the information field is an SRS resource indication field.

In a possible embodiment, taking the SRS resource indication information being carried in the DCI as an example, the DCI may further include an information field, and the information field is used for indicating multiple SRS resources.

In a possible embodiment, the SRS resource indication information indicates the SRS resource from multiple SRS resource sets, and multiple SRS resources are indicated from one SRS resource set. In the present embodiment, alternatively, the information field is an SRS resource set indication field, and may also be used for indicating the SRS resource set. Alternatively, different SRS resources indicated by the SRS resource indication information are indicated from different SRS resource sets.

In a case that the SRS resource indication information indicates the SRS resource from the SRS resource set, the first SRS resource may be indicated from the first SRS resource set and the second SRS resource may be indicated from the second SRS resource set through the information field.

The information field may be understood as a field in the RRC signaling, the MAC CE signaling, the DCI signaling, and a parameter in the RRC signaling.

In another possible embodiment, taking the SRS resource indication information being carried in the DCI as an example, the DCI may include multiple information fields, and each of the multiple information fields is used for indicating one SRS resource.

Exemplarily, the DCI includes two information fields, the first information field indicates the first SRS resource, and the second information field indicates the second SRS resource.

In a case that the SRS resource indication information indicates the SRS resource from the SRS resource set, the SRS resource indication information may include two information fields, the first information field indicates the first SRS resource, and the second information field indicates the second SRS resource. The first SRS resource may be an SRS resource indicated by the first information field from the first SRS resource set, and the second SRS resource may be an SRS resource indicated by the second information field from the second SRS resource set.

In a possible embodiment, the SRS resource indication information includes SRS resource set indication information; and the SRS resource set indication information is used for indicating an SRS resource set corresponding to the multiple SRS resources. The SRS resource set corresponding to the multiple SRS resources may be one SRS resource set or multiple SRS resource sets.

Taking a base station configuring two SRS resource sets for a terminal device as an example, an example of an index of the SRS resource set indication information is shown in Table 3.

Table 3

| Bit field mapped to index | SRS resource set indication information |
|---|---|
| 0 | First SRS resource set |
| 1 | Second SRS resource set |
| 2 | First SRS resource set and second SRS resource set |
| 3 | Reserved |

For example, the first SRS resource and the second SRS resource belong to the same SRS resource set. As shown in Table 3, in a case that the SRS resource set indication information has a value of 0, it indicates that both the first SRS resource and the second SRS resource are SRS resources in the first SRS resource set. In a case that the SRS resource set indication information has a value of 1, it indicates that both the first SRS resource and the second SRS resource are SRS resources in the second SRS resource set.

For another example, the first SRS resource and the second SRS resource belong to different SRS resource sets. As shown in Table 3, in a case that the SRS resource set indication information has a value of 2, it means that the first SRS resource is an SRS resource in the first SRS resource set, and the second SRS resource is an SRS resource in the second SRS resource set.

Exemplarily, the SRS resource indication information may further include first SRS resource indication information, and the first SRS resource indication information is used for indicating an SRS resource in the multiple SRS resources corresponding to an SRS resource set indicated by the SRS resource set indication information.

For example, the SRS resource indication information carried by the DCI includes the SRS resource set indication information and the first SRS resource indication information. The SRS resource set indication information indicates an SRS resource set corresponding to the PUSCH transmission, and the first SRS resource indication information is used for indicating an SRS resource in the multiple SRS resources corresponding to an SRS resource set indicated by the SRS resource set indication information.

In a possible embodiment, the SRS resource indication information includes at least a first information field and a second information field, the first information field indicates an SRS resource set, and the second information field indicates an SRS resource. The first information field here may be understood as the SRS resource set indication information, and the second information field may be understood as the first SRS resource indication information.

In a possible embodiment, the SRS resource indication information may indicate at least two SRS resources for the first transmission layer from a same SRS resource set. It may be understood that the first SRS resource and the second SRS resource are SRS resources in the same SRS resource set.

In another possible embodiment, the SRS resource indication information may indicate at least two SRS resources for the first transmission layer from multiple SRS resource sets. It may be understood that, taking at least two SRS resources being the first SRS resource and the second SRS resource as an example, the first SRS resource belongs to an SRS resource in the first SRS resource set, and the second SRS resource belongs to an SRS resource in the second SRS resource set.

Exemplarily, the SRS resource indication information indicates multiple SRS resource sets. In a case that each of the multiple SRS resource sets includes only one SRS resource, the SRS resource indication information indicates only one SRS resource from each SRS resource set.

Exemplarily, the SRS resource indication information indicates multiple SRS resource sets. In a case that each of the multiple SRS resource sets includes multiple SRS resource, the SRS resource indication information indicates multiple SRS resource from each SRS resource set.

Taking the SRS resource set including two SRS resources as an example, the two SRS resources are the first SRS resource 0 and the second SRS resource 1. An example of index of the SRS resource indication information is shown in Table 4.

Table 4

| Bit field mapped to index | SRI(s), $N_{SRS}$ = 2 |
| --- | --- |
| 0 | 0 |
| 1 | 1 |
| 2 | 0, 1 |
| 3 | Reserved |

SRI is a sounding reference signal resource indicator (SRS resource indicator), i.e., the SRS resource indication information. As shown in Table 4, in a case that the SRS resource indication information has a value of 0, it indicates one SRS resource in the SRS resource set, i.e., the first SRS resource 0. In a case that the SRS resource indication information has a value of 1, it indicates one SRS resource in the SRS resource set, i.e., the second SRS resource 1. In a case that the SRS resource indication information has a value of 2, it indicates two SRS resources in the SRS resource set, i.e., the first SRS resource 0 and the second SRS resource 1.

In a possible embodiment, in a case that the SRS resource indication information indicates at least two SRS resources for the first transmission layer in multiple SRS resource sets, the SRS resource indication information indicates M SRS resources in the multiple SRS resource sets, and M is a positive integer.

Exemplarily, in some embodiments, in a case that M=10, the SRS resource indication information may indicate ten SRS resources from three SRS resource sets, five SRS resources of the ten SRS resources may belong to the same SRS resource set, three SRS resources may belong to the same SRS resource set, and two SRS resources may belong to the same SRS resource set.

In a possible embodiment, in a case that the SRS resource indication information indicates at least two SRS resources in multiple SRS resource sets, the SRS resource indication information indicates M SRS resources in a first SRS resource set of the multiple SRS resource sets, and M is a positive integer.

For example, in a case that M=1, the first SRS resource set includes only one SRS resource, and the SRS resource indication information at this time is the SRS resource set indication information.

For example, in a case that the SRS resource set configured by RRC signaling includes only one SRS resource, the SRS resource indication information is configuration information of the SRS resource set.

For another example, in a case that only one SRS resource set is configured by RRC signaling, the SRS resource indication information is configuration information of the SRS resource set.

In a possible embodiment, in a case that the SRS resource indication information indicates at least two SRS resources for the first transmission layer in multiple SRS resource sets, multiple SRS resource sets are SRS resource sets with a same usage type.

In a possible embodiment, in a case that the SRS resource indication information indicates multiple SRS resources, the multiple SRS resources are SRS resources with the same usage type.

In a 3GPP NR (New Radio) system, a PUSCH transmission mode may be codebook-based PUSCH transmission and non-codebook-based PUSCH transmission.

For example, in a case that PUSCH is codebook-based PUSCH, the SRS resource is an SRS resource with an usage type of codebook, or an SRS resource in an SRS resource set with an usage type of codebook, and the above SRS resource set is an SRS resource set with an usage type of codebook. That is, in a case that PUSCH transmission is codebook-based transmission, the SRS resource set is an SRS resource set with usage configured as "codebook".

For another example, in a case that PUSCH is non-codebook-based PUSCH, the above SRS resource is an SRS resource with an usage type of non-codebook, or an SRS resource in an SRS resource set with an usage type of non-codebook, and the above SRS resource set is an SRS resource set with an usage type of non-codebook. That is, in a case that PUSCH transmission is non-codebook-based transmission, the SRS resource set is an SRS resource set with usage configured as "nonCodebook".

Alternatively, the SRS resource set is an SRS resource set with the same usage type configured by a parameter for configuring an SRS resource set list. For example, the SRS resource set is an SRS resource set with the same usage type included in SRS resource sets configured by the parameter srs-ResourceSetToAddModList. For another example, the SRS resource set is an SRS resource set with the same usage type included in SRS resource sets configured by the parameter srs-ResourceSetToAddModListDCI-0-2.

In a possible embodiment, in a case that the SRS resource indication information indicates at least two SRS resources for the first transmission layer in multiple SRS resource sets, a fourth SRS resource and a fifth SRS resource of the at least two SRS resources are SRS resources with a same first parameter in different SRS resource sets, and the fourth SRS resource and the fifth SRS resource are any two SRS resources of the at least two SRS resources.

The first parameter is a parameter used for indicating the association relationship between the SRS resources. It may be understood that SRS resources with the same first parameter have an association relationship.

Exemplarily, taking the first parameter identifier being a sounding reference signal resource indication index (SRSpoolIndex) as an example, SRS resources with the same SRSpoolIndex value are SRS resources having an association relationship.

In a case that an SRS resource set includes multiple SRS resources, each SRS resource in the SRS resource set has different first parameters, which means that each SRS resource in the same SRS resource set has different first parameters.

In a possible embodiment, in a case that the SRS resource indication information indicates multiple SRS resources, all SRS resources have an association relationship. It assumes that at least two SRS resources include a first SRS resource and a second SRS resource, which means that the first SRS resource and the second SRS resource are any two SRS resources of at least two SRS resources. The first SRS resource and the second SRS resource are SRS resources indicated from SRS resources having an association relationship.

The association relationship may include one or more of the following items.

(1) A first association relationship: the first SRS resource and the second SRS resource are SRS resources in the same SRS resource set.

The first SRS resource and the second SRS resource are included in the same SRS resource set, and the SRS resource indication information may indicate the first SRS resource and the second SRS resource from the same SRS resource set.

(2) A second association relationship: the first SRS resource and the second SRS resource have a same index in respective SRS resource sets.

Exemplarily, the SRS resources are sorted based on a size of the ID in each SRS resource set, and the first SRS resource and the second SRS resource have the same index in an ascending order of ID, or the first SRS resource and the second SRS resource have the same index in a descending order of ID.

Exemplarily, the first SRS resource and the second SRS resource have the same order in which they are configured in their respective SRS resource sets.

Exemplarily, the SRS resource indication information indicates the index of the SRS resource, and the PUSCH transmission corresponds to SRS resources with the same index in multiple SRS resource sets.

(3) A third association relationship: the first SRS resource and the second SRS resource correspond to the same first parameter.

The first parameter is a parameter used for indicating the association relationship between the SRS resources.

Exemplarily, in a case that the first SRS resource and the second SRS resource correspond to the same first parameter, the SRS resource indication information includes the first parameter indication information, and the first parameter indication information is used for indicating at least two SRS resources. It may also be understood that the SRS resource indication information includes first parameter indication information, and the first parameter indication information is used for indicating a first parameter corresponding to the at least two SRS resources.

Exemplarily, the first SRS resource and the second SRS resource are SRS resources corresponding to the same first parameter in the same SRS resource set.

Exemplarily, the first SRS resource and the second SRS resource are SRS resources corresponding to the same first parameter in different SRS resource sets. Each SRS resource in the same SRS resource set has different first parameters.

Exemplarily, taking the first parameter identifier being a sounding reference signal resource indication index (SRSpoolIndex) as an example, SRS resources with the same SRSpoolIndex value are SRS resources having an association relationship. The SRS resource indication information indicates one SRS resource, or multiple SRS resources having an association relationship.

It may be understood that the SRS resource indication information only indicates one SRS resource, but there exists other SRS resources having the same first parameter as the SRS resource, which are not indicated by the SRS resource indication information and are needed in PUSCH transmission. PUSCH transmission may be performed based on the following method.

The first parameter may be configured in a configuration parameter of the SRS resource, and the first parameter may also be configured in a configuration parameter of the SRS resource set.

In a case that the SRS resource set is configured with the first parameter, all SRS resources in the SRS resource set correspond to the same first parameter.

(4) A fourth association relationship: SRS resources configured with the same first parameter may be indicated at the same time. That is, PUSCH transmission may correspond to SRS resources configured with the same first parameter.

(5) A fifth association relationship: Antenna ports corresponding to the SRS resources configured with the same first parameter correspond to different ports of the multiple ports. Alternatively, PUSCH transmission corresponds to multiple antenna ports, and the SRS resources configured with the same first parameter correspond to different ports of the multiple antenna ports.

Alternatively, the association relationship includes: the first SRS resource and the second SRS resource correspond to different second parameters.

The second parameter may also be a parameter used for indicating the association relationship between the SRS resources. It may be understood that SRS resources with different second parameters have an association relationship.

For example, the second parameter may be a panel, and the first SRS resource and the second SRS resource correspond to different panels. The first parameter and the second parameter in the above content may be the same parameter or different parameters.

Alternatively, the terminal determines an SRS resource corresponding to the PUSCH transmission based on the association relationship and the SRS resource indication information.

Exemplarily, the SRS resource indication information indicates an SRS resource having a first parameter value of 1, then the SRS resource corresponding to the PUSCH transmission is all SRS resources having the first parameter value of 1.

Alternatively, the terminal device determines one or more of the antenna port, the precoding matrix, the spatial filtering, and transmission power corresponding to the PUSCH based on the determined SRS resources, and performs PUSCH transmission based on one or more of the antenna port, the precoding matrix, the spatial filtering, and the transmission power corresponding to the PUSCH.

In a possible embodiment, a third SRS resource having an association relationship with at least one SRS resource of multiple SRS resources indicated by the SRS resource indication information is determined; and the PUSCH transmission is performed based on at least one SRS resource indicated by the SRS resource indication information and the third SRS resource.

In a possible implementation, the SRS resource indication information only indicates the first SRS resource, and the terminal device determines an SRS resource corresponding to the PUSCH based on the association relationship between the SRS resource indication information and other SRS resources. For example, a third SRS resource having an association relationship with a first SRS resource indicated by the SRS resource indication information is determined; and the PUSCH transmission is performed based on the first SRS resource indicated by the SRS resource indication information and the third SRS resource.

In a possible embodiment, each antenna port for transmitting at least two SRS resources transmits SRS using the same transmission power; or, each antenna port of the SRS corresponding to at least two SRS resources transmits SRS using the same transmission power.

Alternatively, in a case that at least two SRS resources have an association relationship, the transmission power of the antenna ports of at least two SRS resources is the same.

In a possible embodiment, the first transmission layer corresponds to at least two ports, and each of the at least two ports corresponds to one SRS resource in the at least two SRS resources.

Exemplarily, there are two ports in the first transmission layer, namely a first port and a second port. The first port corresponds to the first SRS resource, and the second port corresponds to the second SRS resource.

The first port may include one or more ports, and the second port may include one or more ports.

It should be noted that the port in present disclosure may also be referred to as an antenna port. An antenna port included in the SRS resource may also be referred to as an SRS port, an SRS antenna port, etc. An antenna port of the PUSCH may also be referred to as a PUSCH port, a PUSCH antenna port, etc. In present disclosure, the SRS resource corresponds to M SRS ports, which may be understood as that the SRS resource is configured with M SRS ports, or the SRS resource includes M SRS ports, or the M SRS ports of the SRS resource.

It should be noted that the concepts of the first port and the second port in present disclosure may be understood as a port set, and a port set may include one or more ports.

The first port and the second port may be PUSCH ports or SRS ports.

In a case that the first port and the second port are SRS ports, a first SRS port corresponding to one or more layers of PUSCH corresponds to the first SRS resource, and the second SRS port corresponds to the second SRS resource.

In a case that the first port and the second port are PUSCH ports, the first PUSCH port corresponding to one or more transmission layers of PUSCH corresponds to the first SRS resource, and the second PUSCH port corresponds to the second SRS resource.

Alternatively, in a case that the first port and the second port may be PUSCH ports, the first port of at least two ports and the antenna port of the first SRS resource of at least two SRS resources have a corresponding relationship; or, the first port and an antenna port of the first SRS resource of at least two SRS resources are the same port, and the second port and an antenna port of the second SRS resource of at least two SRS resources are the same port.

Alternatively, the PUSCH port and the SRS port are the same port. The first PUSCH port and an antenna port of the first SRS resource are the same port, and the second PUSCH port and an antenna port of the second SRS resource are the same port.

In a possible embodiment, an index of at least one port in the at least two ports is determined based on a number of PUSCH ports of at least one other ports; or an index of at least one of the at least two ports is determined based on a number of antenna ports of an SRS resource corresponding to at least one other ports.

An index of at least one port in the above content may be understood as a index of at least one port.

Alternatively, an index of at least one antenna port in at least two ports is determined based on the number of PUSCH ports of at least one other two ports.

Specifically, an index of the PUSCH port of the K-th antenna port in at least two ports is determined based on the number of PUSCH ports of at least one other two ports.

wherein K is a positive integer greater than 1, and the at least one other port is a port in at least two ports other than the K-th port.

Exemplarily, taking the first port and the second port as an example, the first port includes N antenna ports, and the index of the i-th antenna port of the second port is C+i+N, wherein C may be a constant of 1000.

Alternatively, an index of at least one antenna port in at least two ports is determined based on the number of antenna ports of an SRS resource corresponding to at least one other port.

Specifically, an index of the PUSCH port of the K-th port in at least two ports is determined based on the number of antenna ports of an SRS resource corresponding to at least one other port.

wherein K is a positive integer greater than 1, and the at least one other port is a port in at least two ports other than the K-th port.

Exemplarily, taking the first port and the second port as an example, the first SRS resource is configured with N antenna ports, and an index of the i-th antenna port of the second port is C+i+N, wherein C may be a constant of 1000.

It should be noted that in the embodiment of the present disclosure, taking only the first port and the second port as examples, the SRS resource indication information in the above content may indicate multiple resources. In a case that the SRS resource indication information indicates ten resources, if PUSCH transmission needs to be performed through the first transmission layer, it can configure 10 ports in the first transmission, which means from the first port to the tenth port. The first port may include multiple ports, and the tenth port may include multiple ports. The first port corresponds to a first SRS resource, the second port corresponds to a second SRS resource, and the tenth port corresponds to a tenth SRS resource.

Alternatively, an index of antenna ports of the M-th SRS resource may be determined based on the number of antenna ports configured for first M-1 SRS resources.

Exemplarily, it assumes that the number of antenna ports configured for the P-th SRS resource is $m_p$, an index of the i-th antenna port of the M-th SRS resource is $1000 + i + \sum_{P=1}^{M-1} m_P$.

Alternatively, an index of an M-th port corresponding to the PUSCH may be determined based on the number of antenna ports configured for the first M-1 SRS resources.

Exemplarily, it assumes that the number of antenna ports configured for the P-th SRS resource is $m_p$, an index of

the i-th antenna port of the M-th port is $1000 + i + \sum_{P=1}^{M-1} m_P$ .

In a possible embodiment, the uplink data transmission method provided in the embodiment of the present disclosure may be a codebook-based PUSCH transmission, or a non-codebook PUSCH transmission.

In codebook-based PUSCH transmission, the terminal device may determine a precoder corresponding to the PUSCH transmission based on an SRI, a transmission pre-coding matrix indicator (TPMI) and a transmission rank.

Alternatively, when the PUSCH transmission is codebook-based transmission, SRI only exists when an SRS resource set obtained by channel state information (CSI) of the codebook-based PUSCH includes multiple SRS resources. Alternatively, when the PUSCH transmission is non-codebook-based transmission, SRI only exists when an SRS resource set obtained by channel state information (CSI) of the non-codebook-based PUSCH includes multiple SRS resources.

In the present disclosure, the SRS resource set obtained by the CSI of the codebook-based PUSCH may refer to an SRS resource set with usage type of codebook. The SRS resource set obtained by the CSI of the non-codebook-based PUSCH may refer to an SRS resource set with usage type of non-codebook.

When the SRS resource set obtained by the CSI of the codebook-based PUSCH includes multiple SRS resources, which means that SRI exists, TPMI indicates a precoder corresponding to each transmission layer of PUSCH, and the precoder corresponds to an SRS resource indicated by SRI, and is selected from an uplink codebook with the number of antenna ports being equal to the number of antenna ports configured for the SRS resource indicated by SRI.

When the SRS resource set obtained by the CSI of the codebook-based PUSCH includes only one SRS resource, which means that SRI does not exist, a precoder indicated by TPMI corresponding to each transmission layer of PUSCH corresponds to the SRS resource, and is selected from an uplink codebook with the number of antenna ports being equal to the number of antenna ports configured for the SRS resource.

Alternatively, at least two ports corresponding to the first transmission layer are antenna ports to which the transmission layer of the PUSCH is mapped after precoding.

Exemplarily, the first transmission layer includes a first port and a second port, and the first port and the second port are antenna ports to which the first transmission layer of the PUSCH is mapped after precoding.

The PUSCH transmission layer is mapped to the first port and the second port through the precoding matrix W. It assumes that the first port is $p_0$, ..., $p_{s1}$, and the second port is $p_{s1+1}$, ..., $p_{s1+s2-1}$, a precoding matrix W with a dimension of (s1+s2)×v may be used for mapping the data $[y^{(0)}(i) \ldots\ldots y^{(v-1)}(i)]^T$ in the i-th symbol of v layers of PUSCH to the antenna port through the following formula. The specific formula is as follows:

$$\begin{bmatrix} z^{(p_0)}(i) \\ \ldots \\ z^{(p_{s1+s2-1})}(i) \end{bmatrix} = W \begin{bmatrix} y^{(0)}(i) \\ \ldots \\ y^{(v-1)}(i) \end{bmatrix}$$

Alternatively, a number of antenna ports of multiple SRS resources are the same.

Alternatively, multiple SRS resources are indicated by different information fields.

Alternatively, precoding matrices corresponding to multiple SRS resources are indicated by different precoding indication information.

Alternatively, all v layers of PUSCH may be mapped to a total of $\rho$ antenna ports of X SRS resources through the precoding matrix W.

Alternatively, the precoding matrix W consists of X matrices, and each of X matrices corresponds to a group of

$$W = \begin{bmatrix} W_1 \\ \vdots \\ W_X \end{bmatrix}$$

antenna ports or an SRS resource. For example, , wherein $W_1 \cdots$ , $W_X$ represent precoding matrices corresponding to X SRS resources or X groups of antenna ports, respectively.

v, X and $\rho$ in the above embodiment are all positive integers. For example, X=2, $\rho$=8.

In a possible implementation, in step S202, the terminal device may perform PUSCH transmission based on the SRS resource indication information and precoding indication information.

The precoding indication information is received by the terminal device. The terminal device may receive the precoding indication information before receiving the SRS resource indication information; the terminal device may also receive the precoding indication information after receiving the SRS resource indication information; the terminal device may also receive the precoding indication information while receiving the SRS resource indication information.

Alternatively, the terminal device determines the precoding matrix for the PUSCH based on the number of antenna ports included in the SRS resource indicated by the SRS resource indication information and the precoding indication information.

Alternatively, when the SRS resource indication information indicates one SRS resource, the precoding matrix is determined from a codebook with a number of antenna ports being equal to the number of antenna ports configured for the SRS resource based on the precoding indication information.

Alternatively, when the SRS resource indication information indicates multiple SRS resources, the precoding matrix is determined from a codebook with a number of antenna ports being equal to a sum of the number of antenna ports configured for multiple SRS resources based on the precoding indication information.

Alternatively, the precoding indication information at least includes first precoding indication information and second precoding indication information, the first precoding indication information indicates a first precoding matrix corresponding to the first port, and the second precoding indication information indicates a second precoding matrix corresponding to the second port.

Exemplarily, a first precoding matrix is a precoding matrix indicated from a codebook with a number of antenna ports being equal to a number of antenna ports configured for the first SRS resource, and a second precoding matrix is a precoding matrix indicated from a codebook with a number of antenna ports being equal to a number of antenna ports configured for the second SRS resource.

It may be understood that the terminal device determines a first precoding matrix based on the first precoding indication information and a codebook with a number of antenna ports being equal to a number of antenna ports configured for the first SRS resource, and the terminal device determines a second precoding matrix based on the second precoding indication information and a codebook with a number of antenna ports being equal to a number of antenna ports configured for the second SRS resource.

Exemplarily, the first precoding indication information is used for indicating a first precoding matrix from a codebook with a number of antenna ports being equal to a number of antenna ports corresponding to a first SRS resource. The second precoding indication information is used for indicating a second precoding matrix from a codebook with a number of antenna ports being equal to a number of antenna ports corresponding to a second SRS resource.

It may be understood that: the terminal device determines the first precoding matrix from a codebook with a number of antenna ports being equal to a number of antenna ports corresponding to the first SRS resource based on the first precoding indication information, and the terminal device determines the second precoding matrix from a codebook with a number of antenna ports being equal to a number of antenna ports corresponding to the second SRS resource based on the second precoding indication information.

Alternatively, the first precoding matrix is determined based on the SRS corresponding to the first SRS resource, and the second precoding matrix is determined based on the SRS corresponding to the second SRS resource.

Alternatively, the precoding indication information is used for indicating a precoding matrix from a codebook with a number of antenna ports being equal to a sum of a number of antenna ports configured for all antenna ports corresponding to the PUSCH.

Alternatively, the precoding indication information is used for indicating a precoding matrix corresponding to a first transmission layer from a codebook with a number of antenna ports being equal to a sum of a number of antenna ports of the at least two SRS resources.

Alternatively, a precoding matrix corresponding to an SRS resource is a precoding matrix mapped to antenna ports corresponding to the SRS resource.

Alternatively, the precoding indication information is used for indicating a precoding matrix from a codebook with a number of antenna ports being equal to the sum of the number of antenna ports configured for the first SRS resource and the number of antenna ports configured for the second SRS resource.

Alternatively, the precoding indication information further includes adjustment information of a precoding matrix corresponding to at least one port and/or at least one SRS resource, the at least one port is an antenna port of the antenna ports corresponding to the PUSCH transmission, and the at least one SRS resource is an SRS resource in the multiple SRS resources. Alternatively, the adjustment information includes at least one of the following information: phase adjustment information or amplitude adjustment information.

Alternatively, the precoding matrices corresponding to multiple SRS resources are indicated by the precoding indication information respectively. The precoding matrix corresponding to any one SRS resource is a precoding matrix selected from a codebook corresponding to the number of antenna ports included in the SRS resource.

Alternatively, the precoding indication information may be carried by one or more of RRC signaling, MAC-CE signaling or DCI signaling.

Take the precoding indication information being carried by DCI signaling as an example. Alternatively, the precoding indication information is carried by a precoding matrix and/or a transmission layer number indication field in the DCI signaling. Alternatively, the first precoding indication information and the second precoding indication information are carried by different information fields. For example, the first precoding indication information is carried by the precoding matrix and/or the transmission layer number indication field in the DCI signaling, and the second precoding indication information is carried by the precoding matrix and/or the transmission layer number indication field in the DCI signaling.

Alternatively, information fields carrying the precoding indication information has a corresponding relationship with information fields carrying the SRI and/or an SRS resource indicated by the SRI.

Alternatively, the corresponding relationship is that: the information fields carrying the precoding indication information is in one-to-one correspondence with the information fields carrying the SRI. That is, one SRS resource indication information corresponds to one precoding indication information. Alternatively, one SRS resource corresponds to one precoding matrix and the number of transmission layers.

Alternatively, the corresponding relationship is that the information fields carrying the precoding indication information is in one-to-one correspondence with the SRS resource indicated by the SRI. That is, one SRS resource corresponds to one precoding indication information. Alternatively, one SRS resource corresponds to one precoding matrix and the number of transmission layers.

Alternatively, the corresponding relationship is that multiple information fields carrying precoding indication information correspond to one information field carrying SRI, and each of the multiple information fields corresponds to one SRS resource indicated by the SRI.

Alternatively, the base station may send precoding indication information to the terminal device for enabling the terminal device to perform PUSCH transmission based on the SRS resource indication information and the precoding indication information, and receive data or signals of PUSCH transmission performed by the terminal device. The precoding indication information is used for indicating a precoding matrix corresponding to the first transmission layer from a codebook with a number of antenna ports being equal to a sum of a number of antenna ports of the at least two SRS resources.

Alternatively, the base station may send precoding indication information to the terminal device for enabling the terminal device to perform PUSCH transmission based on the SRS resource indication information and the precoding indication information, and receive data or signals of PUSCH transmission performed by the terminal device. The precoding indication information indicates a precoding matrix corresponding to each of the multiple SRS resources.

The precoding indication information includes first precoding indication information and second precoding indication information, the first precoding indication information is used for indicating a first precoding matrix corresponding to a first port or a sixth SRS resource, the second precoding indication information is used for indicating a second precoding matrix corresponding to a second port or a seventh SRS resource, the sixth SRS resource and the seventh SRS resource are SRS resources of the multiple SRS resources; the first port or the second port is an antenna port corresponding to the PUSCH transmission.

Alternatively, the first precoding matrix is determined based on the SRS corresponding to the sixth SRS resource, and the second precoding matrix is determined based on the SRS corresponding to the seventh SRS resource.

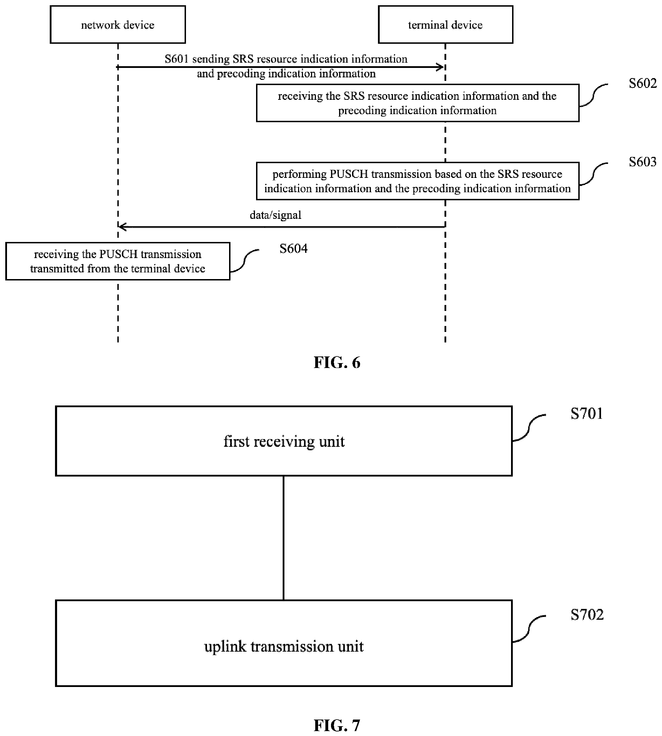

FIG. 6 is a schematic diagram of an interaction between a base station and a terminal device according to some embodiments of the present disclosure. As shown in FIG. 6.

Step S601, the network device sends SRS resource indication information and precoding indication information to the terminal device.

Step S602, the terminal device receives the SRS resource indication information and the precoding indication information.

Step S603, the terminal device performs PUSCH transmission based on the SRS resource indication information and the precoding indication information.

Step S604, the network device receives the PUSCH transmission transmitted from the terminal device.

Based on the same concept, some embodiments of the present disclosure further provides a terminal device. FIG. 7 is a schematic structural diagram of a terminal device according to some embodiments of the present disclosure. As shown in FIG. 7, the terminal device includes:

a first receiving unit 701, configured to receive sounding reference signal (SRS) resource indication information; and
an uplink transmission unit 702, configured to perform PUSCH transmission based on the SRS resource indication information.

In a possible implementation, each of the at least two SRS resources has a same number of antenna ports.

In a possible implementation, in the multiple SRS resources, an index of antenna port of at least one SRS resource is determined based on a number of antenna ports of at least one other SRS resource.

In a possible implementation, a signaling carrying the SRS resource indication information includes an information field, the information field is used for indicating the multiple SRS resources; or a signaling carrying the SRS resource indication information comprises multiple information fields; each of the multiple information fields is used for indicating one SRS resource in the multiple SRS resources.

In a possible implementation, the SRS resource indication information includes SRS resource set indication information; and the SRS resource set indication information is used for indicating an SRS resource set corresponding to the multiple SRS resources.

In a possible implementation, the SRS resource indication information further includes first SRS resource indication information, and the first SRS resource indication information is used for indicating an SRS resource in the multiple SRS resources corresponding to an SRS resource set indicated by the SRS resource set indication information.

In a possible implementation, a first SRS resource and a second SRS resource in the at least two SRS resources have an association relationship; the first SRS resource and the second SRS resource are any two SRS resources in the at least two SRS resources;

the association relationship includes one or more of the following items:

the first SRS resource and the second SRS resource corresponding to a same first parameter; the first SRS resource and the second SRS resource corresponding to different second parameters; or

the first SRS resource and the second SRS resource have a same index in respective SRS resource sets.

In a possible implementation, the SRS resource indication information includes first parameter indication information, and the first parameter indication information is used for indicating a first parameter corresponding to the at least two SRS resources.

In a possible implementation, the uplink transmission unit 702 is further used for determining a third SRS resource having an association relationship with at least one SRS resource of multiple SRS resources indicated by the SRS resource indication information; and performing PUSCH transmission based on at least one SRS resource indicated by the SRS resource indication information and the third SRS resource.

In a possible implementation, a transmission power used for each antenna port of SRSs of the at least two SRS resources is the same.

In a possible implementation, the SRS resource indication information indicates at least two SRS resources for the first transmission layer from a same SRS resource set; or the SRS resource indication information indicates at least two SRS resources for the first transmission layer in multiple SRS resource sets.

In a possible implementation, in a case that the SRS resource indication information indicates at least two SRS resources for the first transmission layer in multiple SRS resource sets, the SRS resource indication information indicates M SRS resources in the multiple SRS resource sets, and M is a positive integer.

In a possible implementation, in a case that the SRS resource indication information indicates at least two SRS resources for the first transmission layer in multiple SRS resource sets, SRS resource sets in the multiple SRS resource sets are SRS resource sets with a same usage type.

In a possible implementation, in a case that the SRS resource indication information indicates at least two SRS resources for the first transmission layer in multiple SRS resource sets, a fourth SRS resource and a fifth SRS resource in the at least two SRS resources are SRS resources with a same first parameter in different SRS resource sets; and the fourth SRS resource and the fifth SRS resource are any two SRS resources in the at least two SRS resources.

In a possible implementation, the first transmission layer corresponds to at least two ports, and each of the at least two ports corresponds to one SRS resource in the at least two SRS resources.

In a possible implementation, the at least two ports are PUSCH ports; wherein a first port of the at least two ports has a corresponding relationship with an antenna port of a first SRS resource of the at least two SRS resources; or a first port of the at least two ports is the same as an antenna port of a first SRS resource of the at least two SRS resources.

In a possible implementation, within at least two ports, an index of at least one port is determined based on a number of PUSCH ports of at least one other ports; or within at least two ports, an index of at least one port is determined based on a number of antenna ports of an SRS resource corresponding to at least one other ports.

In a possible implementation, the uplink transmission unit 702 is further used for performing PUSCH transmission based on the SRS resource indication information and precoding indication information; the precoding indication information being used for indicating a precoding matrix corresponding to the first transmission layer from a codebook with a number of antenna ports being equal to a sum of a number of antenna ports of the at least two SRS resources.

In a possible implementation, the uplink transmission unit 702 is further used for performing PUSCH transmission based on the SRS resource indication information and precoding indication information; the precoding indication information being used for indicating a precoding matrix corresponding to each of the multiple SRS resources.

In a possible implementation, the precoding indication information includes first precoding indication information and second precoding indication information; the first precoding indication information is used for indicating a first precoding matrix corresponding to a first port or a sixth SRS resource; the second precoding indication information is used for indicating a second precoding matrix corresponding to a second port or a seventh SRS resource; the sixth SRS resource and the seventh SRS resource are SRS resources of the multiple SRS resources; the first port or the second port is an antenna port corresponding to the PUSCH transmission.

In a possible implementation, the first precoding indication information corresponds to a codebook with a number of antenna ports being equal to a number of antenna ports corresponding to the sixth SRS resource; the second precoding indication information corresponds to a codebook with a number of antenna ports being equal to a number of antenna ports corresponding to the seventh SRS resource.

In a possible implementation, the precoding indication information includes adjustment information for a precoding matrix corresponding to at least one port and/or at least one SRS resource, the at least one port is an antenna port of the antenna ports corresponding to the PUSCH transmission, and the at least one SRS resource is an SRS resource in the multiple SRS resources.

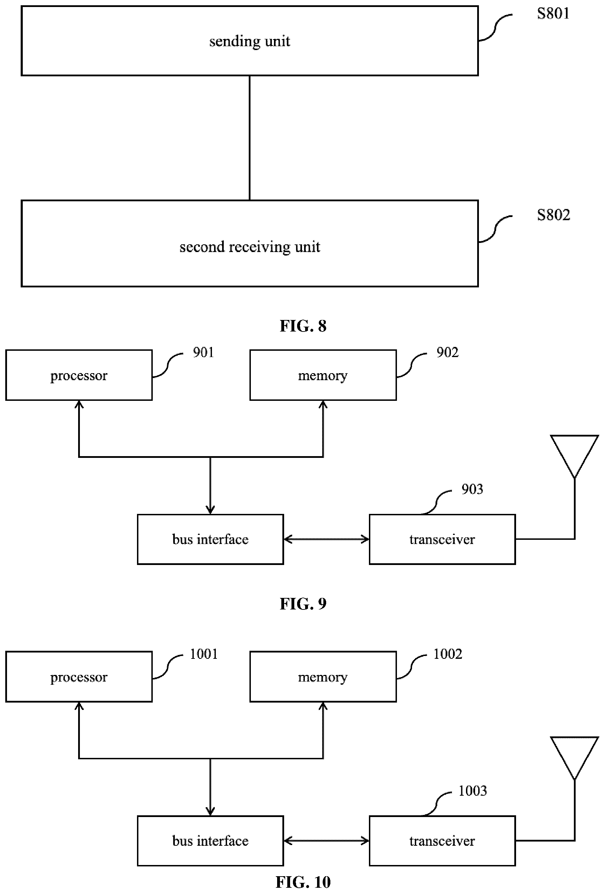

Based on the same concept, some embodiments of the present disclosure further provides a network device. As shown in FIG. 8, the network device includes a sending unit 801, configured to send sounding reference signal (SRS) resource indication information to a terminal device; and a second receiving unit 802, configured to receive physical uplink shared channel (PUSCH) transmission transmitted based on the SRS resource indication information, wherein the PUSCH transmission includes a first transmission layer; the first transmission layer corresponds to at least two SRS resources of the multiple SRS resources.

In a possible implementation, each of the at least two SRS resources has a same number of antenna ports.

In a possible implementation, in the multiple SRS resources, an index of antenna port of at least one SRS resource is determined based on a number of antenna ports of at least one other SRS resource.

In a possible implementation, a signaling carrying the SRS resource indication information includes an information field, the information field is used for indicating the multiple SRS resources; or a signaling carrying the SRS resource indication information comprises multiple information fields; each of the multiple information fields is used for indicating one SRS resource in the multiple SRS resources.

In a possible implementation, the SRS resource indication information includes SRS resource set indication information; and the SRS resource set indication information is used for indicating an SRS resource set corresponding to the multiple SRS resources.

In a possible implementation, the SRS resource indication information further includes first SRS resource indication information, and the first SRS resource indication information is used for indicating an SRS resource in the multiple SRS resources corresponding to an SRS resource set indicated by the SRS resource set indication information.

In a possible implementation, a first SRS resource and a second SRS resource in the at least two SRS resources have an association relationship; the first SRS resource and the second SRS resource are any two SRS resources in the at least two SRS resources; wherein the association relationship includes one or more of the following items: the first SRS resource and the second SRS resource corresponding to a same first parameter; the first SRS resource and the second SRS resource corresponding to different second parameters; or the first SRS resource and the second SRS resource have a same index in respective SRS resource sets.

In a possible implementation, the SRS resource indication information includes first parameter indication information, and the first parameter indication information is used for indicating a first parameter corresponding to the at least two SRS resources.

In a possible implementation, the PUSCH transmission is performed based on at least one SRS resource indicated by the SRS resource indication information and a third SRS resource; and the third SRS resource has an association relationship with at least one SRS resource of multiple SRS resources indicated by the SRS resource indication information.

In a possible implementation, a transmission power used for each antenna port of SRSs of the at least two SRS resources is the same.

In a possible implementation, the SRS resource indication information indicates at least two SRS resources for the first transmission layer from a same SRS resource set; or the SRS resource indication information indicates at least two SRS resources for the first transmission layer in multiple SRS resource sets.

In a possible implementation, in a case that the SRS resource indication information indicates at least two SRS resources for the first transmission layer in multiple SRS resource sets, the SRS resource indication information indicates M SRS resources in the multiple SRS resource sets, and M is a positive integer.

In a possible implementation, in a case that the SRS resource indication information indicates at least two SRS resources for the first transmission layer in multiple SRS resource sets, SRS resource sets in the multiple SRS resource sets are SRS resource sets with a same usage type.

In a possible implementation, in a case that the SRS resource indication information indicates at least two SRS resources for the first transmission layer in multiple SRS resource sets, a fourth SRS resource and a fifth SRS resource in the at least two SRS resources are SRS resources with a same first parameter in different SRS resource sets; and the fourth SRS resource and the fifth SRS resource are any two SRS resources in the at least two SRS resources.

In a possible implementation, the first transmission layer corresponds to at least two ports, and each of the at least two ports corresponds to one SRS resource in the at least two SRS resources.

In a possible implementation, the at least two ports are PUSCH ports; wherein a first port of the at least two ports has a corresponding relationship with an antenna port of a first SRS resource of the at least two SRS resources; or a first port of the at least two ports is the same as an antenna port of a first SRS resource of the at least two SRS resources.

In a possible implementation, within at least two ports, an index of at least one port is determined based on a number of PUSCH ports of at least one other ports; or within at least two ports, an index of at least one port is determined based on a number of antenna ports of an SRS resource corresponding to at least one other ports.

In a possible implementation, the sending unit 801 is further used for sending precoding indication information; the precoding indication information being used for indicating a precoding matrix corresponding to the first transmission layer from a codebook with a number of antenna ports being equal to a sum of a number of antenna ports of the at least two SRS resources.

In a possible implementation, the sending unit 801 is further used for: sending precoding indication information; the precoding indication information being used for indicating a precoding matrix corresponding to each of the multiple SRS resources.

In a possible implementation, the precoding indication information includes first precoding indication information and second precoding indication information; the first precoding indication information is used for indicating a first precoding matrix corresponding to a first port or a sixth SRS resource; the second precoding indication information is used for indicating a second precoding matrix corresponding to a second port or a seventh SRS resource; the sixth SRS resource and the seventh SRS resource are SRS resources of the multiple SRS resources; the first port or the second port is an antenna port corresponding to the PUSCH transmission.

In a possible implementation, the first precoding indication information corresponds to a codebook with a number of antenna ports being equal to a number of antenna ports corresponding to the sixth SRS resource; the second precoding indication information corresponds to a codebook with a number of antenna ports being equal to a number of antenna ports corresponding to the seventh SRS resource.

In a possible implementation, the precoding indication information includes adjustment information for a precoding matrix corresponding to at least one port and/or at least one SRS resource, the at least one port is an antenna port of the antenna ports corresponding to the PUSCH transmission, and the at least one SRS resource is an SRS resource in the multiple SRS resources.

FIG. 9 shows a schematic structural diagram of a terminal device according to some embodiments of the present disclosure, which means a schematic structural diagram of a terminal device. As shown in FIG. 9, the terminal device includes a processor 901, a memory 902, and a transceiver 903.

The processor 901 is responsible for managing the bus architecture and general processing, and the memory 902 may store data used by the processor 901 when performing operations. The transceiver 903 is used for receiving and transmitting data under control of the processor 901.

A bus architecture may include any number of interconnected buses and bridges, which are linked together through various circuits of one or more processors represented by processor 901 and one or more memories represented by the memory 902. The bus architecture may also link together various other circuits, such as peripherals, voltage regulators, and power management circuits, which are well known in the art, and therefore will not be further described in the present disclosure. The bus interface provides an interface. The processor 901 is responsible for managing the bus architecture and general processing, and the memory 902 may store data used by the processor 901 when performing operations.

The flows disclosed in the embodiments of the present disclosure may be applied to the processor 901 or implemented by the processor 901. In the implementation process, each step of the above signal processing flow may be completed by an integrated logic circuit of hardware in the processor 901 or an instruction in the form of software. The processor 901 may be a general-purpose processor, a digital signal processor, an application-specific integrated circuit, a field programmable gate array or other programmable logic device, a discrete gate or transistor logic device, a discrete hardware component, and may implement or perform the methods, steps and logic block diagrams disclosed in the embodiments of present disclosure. A general-purpose processor may be a microprocessor or any conventional processor and the like. The steps of the method disclosed in conjunction with the embodiments of the present disclosure may be directly embodied as executed by a hardware processor, or executed by a combination of hardware and software modules in the processor. The software modules may be located in random access memory, flash memory, read-only memory, programmable read-only memory or electrically erasable programmable memory, registers and other storage media mature in the art. The storage medium is located in the memory 902, and the processor 901 reads the information in the memory 902, and completes the steps of the above signal processing flows in combination with its hardware.

Specifically, the processor 901 is used for reading the program in the memory 902 and performing operations of: controlling the transceiver to receive sounding reference signal (SRS) resource indication information, the SRS resource indication information being used for indicating multiple SRS resources; and controlling the transceiver to perform physical uplink shared channel (PUSCH) transmission, wherein the PUSCH transmission includes a first transmission layer; the first transmission layer corresponds to at least two SRS resources of the multiple SRS resources.

In a possible implementation, each of the at least two SRS resources has a same number of antenna ports.

In a possible implementation, in the multiple SRS resources, an index of antenna port of at least one SRS resource is determined based on a number of antenna ports of at least one other SRS resource.

In a possible implementation, a signaling carrying the SRS resource indication information includes an information field, the information field is used for indicating the multiple SRS resources; or a signaling carrying the SRS resource indication information comprises multiple information fields; each of the multiple information fields is used for indicating one SRS resource in the multiple SRS resources.

In a possible implementation, the SRS resource indication information includes SRS resource set indication information; and the SRS resource set indication information is used for indicating an SRS resource set corresponding to the multiple SRS resources.

In a possible implementation, the SRS resource indication information further includes first SRS resource indication information, and the first SRS resource indication information is used for indicating an SRS resource in the multiple SRS resources corresponding to an SRS resource set indicated by the SRS resource set indication information.

In a possible implementation, a first SRS resource and a second SRS resource in the at least two SRS resources have an association relationship; the first SRS resource and the second SRS resource are any two SRS resources in the at least two SRS resources; wherein the association relationship includes one or more of the following items: the first SRS resource and the second SRS resource corresponding to a same first parameter; the first SRS resource and the second SRS resource corresponding to different second parameters; or the first SRS resource and the second SRS resource have a same index in respective SRS resource sets.

In a possible implementation, the SRS resource indication information includes first parameter indication information, and the first parameter indication information is used for indicating a first parameter corresponding to the at least two SRS resources.

In a possible implementation, the processor is used for determining a third SRS resource having an association relationship with at least one SRS resource of multiple SRS resources indicated by the SRS resource indication information; and controlling the transceiver to perform PUSCH transmission based on at least one SRS resource indicated by the SRS resource indication information and the third SRS resource.

In a possible implementation, a transmission power used for each antenna port of SRSs of the at least two SRS resources is the same.

In a possible implementation, the SRS resource indication information indicates at least two SRS resources for the first transmission layer from a same SRS resource set; or the SRS resource indication information indicates at least two SRS resources for the first transmission layer in multiple SRS resource sets.

In a possible implementation, in a case that the SRS resource indication information indicates at least two SRS resources for the first transmission layer in multiple SRS resource sets, the SRS resource indication information indicates M SRS resources in the multiple SRS resource sets, and M is a positive integer.

In a possible implementation, in a case that the SRS resource indication information indicates at least two SRS resources for the first transmission layer in multiple SRS resource sets, SRS resource sets in the multiple SRS resource sets are SRS resource sets with a same usage type.

In a possible implementation, in a case that the SRS resource indication information indicates at least two SRS resources for the first transmission layer in multiple SRS resource sets, a fourth SRS resource and a fifth SRS resource in the at least two SRS resources are SRS resources with a same first parameter in different SRS resource sets; and the fourth SRS resource and the fifth SRS resource are any two SRS resources in the at least two SRS resources.

In a possible implementation, the first transmission layer corresponds to at least two ports, and each of the at least two ports corresponds to one SRS resource in the at least two SRS resources.

In a possible implementation, the at least two ports are PUSCH ports; wherein a first port of the at least two ports has a corresponding relationship with an antenna port of a first SRS resource of the at least two SRS resources; or a first port of the at least two ports is the same as an antenna port of a first SRS resource of the at least two SRS resources.

In a possible implementation, within at least two ports, an index of at least one port is determined based on a number of PUSCH ports of at least one other ports; or within at least two ports, an index of at least one port is determined based on a number of antenna ports of an SRS resource corresponding to at least one other ports.

In a possible implementation, the processor is used for controlling the transceiver to perform the PUSCH transmission based on the SRS resource indication information and precoding indication information; the precoding indication information being used for indicating a precoding matrix corresponding to the first transmission layer from a codebook with a number of antenna ports being equal to a sum of a number of antenna ports of the at least two SRS resources.

In a possible implementation, the processor is used for controlling the transceiver to perform the PUSCH transmission based on the SRS resource indication information and precoding indication information; the precoding indication information being used for indicating a precoding matrix corresponding to each of the multiple SRS resources.

In a possible implementation, the precoding indication information includes first precoding indication information and second precoding indication information; the first precoding indication information is used for indicating a first precoding matrix corresponding to a first port or a sixth SRS resource; the second precoding indication information is used for indicating a second precoding matrix corresponding to a second port or a seventh SRS resource; the sixth SRS resource and the seventh SRS resource are SRS resources of the multiple SRS resources; the first port or the second port is an antenna port corresponding to the PUSCH transmission.

In a possible implementation, the first precoding indication information corresponds to a codebook with a number of antenna ports being equal to a number of antenna ports corresponding to the sixth SRS resource; the second precoding indication information corresponds to a codebook with a number of antenna ports being equal to a number of antenna ports corresponding to the seventh SRS resource.

In a possible implementation, the precoding indication information includes adjustment information for a precoding matrix corresponding to at least one port and/or at least one SRS resource, the at least one port is an antenna port of the antenna ports corresponding to the PUSCH transmission, and the at least one SRS resource is an SRS resource in the multiple SRS resources.

Based on the same concept, FIG. 10 shows a schematic structural diagram of a network device according to some embodiments of the present disclosure, that is, a schematic structural diagram of a network device. As shown in FIG. 10, the network device includes a processor 1001, a memory 1002, and a transceiver 1003.

The processor 1001 is responsible for managing the bus architecture and general processing, and the memory 1002 may store data used by the processor 1001 when performing operations. The transceiver 1003 is used for receiving and transmitting data under control of the processor 1001.

A bus architecture may include any number of interconnected buses and bridges, which are linked together through various circuits of one or more processors represented by processor 1001 and one or more memories represented by the memory 1002. The bus architecture may also link together various other circuits, such as peripherals, voltage regulators, and power management circuits, which are well known in the art, and therefore will not be further described in the present disclosure. The bus interface provides an interface. The processor 1001 is responsible for managing the bus architecture and general processing, and the memory 1002 may store data used by the processor 1001 when performing operations.

The flows disclosed in the embodiments of the present disclosure may be applied to the processor 1001 or implemented by the processor 1001. In the implementation process, each step of the above signal processing flow may be completed by an integrated logic circuit of hardware in the processor 1001 or an instruction in the form of software. The processor 1001 may be a general-purpose processor, a digital signal processor, an application-specific integrated circuit, a field programmable gate array or other programmable logic device, a discrete gate or transistor logic device, a discrete hardware component, and may implement or perform the methods, steps and logic block diagrams disclosed in the embodiments of present disclosure. A general-purpose processor may be a microprocessor or any conventional processor and the like. The steps of the method disclosed in conjunction with the embodiments of the present disclosure may be directly embodied as executed by a hardware processor, or executed by a combination of hardware and software modules in the processor. The software modules may be located in random access memory, flash memory, read-only memory, programmable read-only memory or electrically erasable programmable memory, registers and other storage media mature in the art. The storage medium is located in the memory 1002, and the processor 1001 reads the information in the memory 1002, and completes the steps of the above signal processing flows in combination with its hardware.

Specifically, the processor 1001 is used for reading the program in the memory 1002 and performing operations of: sending sounding reference signal (SRS) resource indication information to a terminal device through the transceiver, the SRS resource indication information being used for indicating multiple SRS resources; and receiving physical uplink shared channel (PUSCH) transmission transmitted based on the SRS resource indication information through the transceiver, wherein the PUSCH transmission includes a first transmission layer; the first transmission layer corresponds to at least two SRS resources of the multiple SRS resources.

In a possible implementation, each of the at least two SRS resources has a same number of antenna ports.

In a possible implementation, in the multiple SRS resources, an index of antenna port of at least one SRS resource is determined based on a number of antenna ports of at least one other SRS resource.

In a possible implementation, a signaling carrying the SRS resource indication information includes an information field, the information field is used for indicating the multiple SRS resources; or a signaling carrying the SRS resource indication information comprises multiple information fields; each of the multiple information fields is used for indicating one SRS resource in the multiple SRS resources.

In a possible implementation, the SRS resource indication information includes SRS resource set indication information; and the SRS resource set indication information is used for indicating an SRS resource set corresponding to the multiple SRS resources.

In a possible implementation, the SRS resource indication information further includes first SRS resource indication information, and the first SRS resource indication information is used for indicating an SRS resource in the multiple SRS resources corresponding to an SRS resource set indicated by the SRS resource set indication information.

In a possible implementation, a first SRS resource and a second SRS resource in the at least two SRS resources have an association relationship; the first SRS resource and the second SRS resource are any two SRS resources in the at least two SRS resources; wherein the association relationship includes one or more of the following items: the first SRS resource and the second SRS resource corresponding to a same first parameter; the first SRS resource and the second SRS resource corresponding to different second parameters; or the first SRS resource and the second SRS resource have a same index in respective SRS resource sets.

In a possible implementation, the SRS resource indication information includes first parameter indication information, and the first parameter indication information is used for indicating a first parameter corresponding to the at least two SRS resources.

In a possible implementation, the PUSCH transmission is performed based on at least one SRS resource indicated by the SRS resource indication information and a third SRS resource; and the third SRS resource has an association relationship with at least one SRS resource of multiple SRS resources indicated by the SRS resource indication information.

In a possible implementation, a transmission power used for each antenna port of SRSs of the at least two SRS resources is the same.

In a possible implementation, the SRS resource indication information indicates at least two SRS resources for the first transmission layer from a same SRS resource set; or the SRS resource indication information indicates at least two SRS resources for the first transmission layer in multiple SRS resource sets.

In a possible implementation, in a case that the SRS resource indication information indicates at least two SRS resources for the first transmission layer in multiple SRS resource sets, the SRS resource indication information indicates M SRS resources in the multiple SRS resource sets, and M is a positive integer.

In a possible implementation, in a case that the SRS resource indication information indicates at least two SRS resources for the first transmission layer in multiple SRS resource sets, SRS resource sets in the multiple SRS resource sets are SRS resource sets with a same usage type.

In a possible implementation, in a case that the SRS resource indication information indicates at least two SRS resources for the first transmission layer in multiple SRS resource sets, a fourth SRS resource and a fifth SRS resource in the at least two SRS resources are SRS resources with a same first parameter in different SRS resource sets; and the fourth SRS resource and the fifth SRS resource are any two SRS resources in the at least two SRS resources.

In a possible implementation, the first transmission layer corresponds to at least two ports, and each of the at least two ports corresponds to one SRS resource in the at least two SRS resources.

In a possible implementation, the at least two ports are PUSCH ports; wherein a first port of the at least two ports has a corresponding relationship with an antenna port of a first SRS resource of the at least two SRS resources; or a first port of the at least two ports is the same as an antenna port of a first SRS resource of the at least two SRS resources.

In a possible implementation, within at least two ports, an index of at least one port is determined based on a number of PUSCH ports of at least one other ports; or within at least two ports, an index of at least one port is determined based on a number of antenna ports of an SRS resource corresponding to at least one other ports.

In a possible implementation, the processor is used for: controlling the transceiver to send precoding indication information; the precoding indication information being used for indicating a precoding matrix corresponding to the first transmission layer from a codebook with a number of antenna ports being equal to a sum of a number of antenna ports of the at least two SRS resources.

In a possible implementation, the processor is used for: controlling the transceiver to send precoding indication information; the precoding indication information being used for indicating a precoding matrix corresponding to each of the multiple SRS resources.

In a possible implementation, the precoding indication information includes first precoding indication information and second precoding indication information; the first precoding indication information is used for indicating a first precoding matrix corresponding to a first port or a sixth SRS resource; the second precoding indication information is used for indicating a second precoding matrix corresponding to a second port or a seventh SRS resource; the sixth SRS resource and the seventh SRS resource are SRS resources of the multiple SRS resources; the first port or the second port is an antenna port corresponding to the PUSCH transmission.

In a possible implementation, the first precoding indication information corresponds to a codebook with a number of antenna ports being equal to a number of antenna ports corresponding to the sixth SRS resource; the second precoding indication information corresponds to a codebook with a number of antenna ports being equal to a number of antenna ports corresponding to the seventh SRS resource.

In a possible implementation, the precoding indication information includes adjustment information for a precoding matrix corresponding to at least one port and/or at least one SRS resource, the at least one port is an antenna port of the antenna ports corresponding to the PUSCH transmission, and the at least one SRS resource is an SRS resource in the multiple SRS resources.

some embodiments of the present disclosure further provides a computing device readable storage medium for the uplink data transmission method, that is, the content is not lost after power off. The storage medium stores a software program, including a program code, and when the program code is executed on the computing device, the software program may, when being read and executed by one or more processors, implement the steps of any of the uplink data transmission methods above in the embodiment of the present disclosure.

As will be appreciated by those skilled in the art, embodiments of the present disclosure may be provided as a method, system, or computer program product. Accordingly, the present disclosure may take the form of an entirely hardware embodiment, an entirely software embodiment, or some embodiments combining software and hardware aspects. Furthermore, the present disclosure may take the form of a computer program product embodied on one or more computer-usable storage media having computer-usable program code embodied therein, including but not limited to disk storage, optical storage, and the like.

The present disclosure is described with reference to flow charts and/or block diagrams of methods, apparatus (systems), and computer program products according to the present disclosure. It will be understood that each flow and/or block in flow charts and/or block diagrams, and a combination of each flow and/or block in flow charts and/or block diagrams may be implemented by a computer program. These computer program instructions may be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These computer program instructions may also be stored in a computer-readable memory capable of directing a computer or other programmable data processing apparatus to operate in a particular manner, and the instructions stored in the computer-readable memory may result in a manufacture including instruction means, the instruction means may perform the functions specified in one or more flows of the flowchart and/or one or more blocks of the block diagram.

These computer program instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present disclosure without departing from the scope of the present disclosure. Thus, provided that these modifications and variations of the present disclosure fall within the scope of the claims of the present disclosure and their equivalents, the present disclosure is also intended to cover such modifications and variations.

**Claims**

1. An uplink data transmission method, **characterized by** comprising:

   receiving sounding reference signal (SRS) resource indication information, wherein the SRS resource indication information is used for indicating multiple SRS resources; and
   performing physical uplink shared channel (PUSCH) transmission based on the SRS resource indication information, wherein the PUSCH transmission comprises a first transmission layer; the first transmission layer corresponds to at least two SRS resources of the multiple SRS resources.

2. The method of claim 1, **characterized in that** each of the at least two SRS resources has a same number of antenna ports.

3. The method of claim 1, **characterized in that** in the multiple SRS resources, an index of antenna port of at least one SRS resource is determined based on a number of antenna ports of at least one other SRS resource.

4. The method of any one of claims 1 to 3, **characterized in that** a signaling carrying the SRS resource indication information comprises an information field, the information field is used for indicating the multiple SRS resources; or a signaling carrying the SRS resource indication information comprises multiple information fields; each of the multiple information fields is used for indicating one SRS resource in the multiple SRS resources.

5. The method of any one of claims 1 to 3, **characterized in that** the SRS resource indication information comprises SRS resource set indication information; and the SRS resource set indication information is used for indicating an SRS resource set corresponding to the multiple SRS resources.

6. The method of claim 5, **characterized in that** the SRS resource indication information further comprises first SRS resource indication information, and the first SRS resource indication information is used for indicating an SRS resource in the multiple SRS resources from an SRS resource set indicated by the SRS resource set indication information.

7. The method of any one of claims 1 to 3, **characterized in that** a first SRS resource and a second SRS resource in the at least two SRS resources have an association relationship; the first SRS resource and the second SRS resource are any two SRS resources in the at least two SRS resources;
the association relationship comprises one or more of the following items:

the first SRS resource and the second SRS resource correspond to a same first parameter;
the first SRS resource and the second SRS resource correspond to different second parameters; or
the first SRS resource and the second SRS resource have same indices within respective SRS resource sets corresponding to the first SRS resource and the second SRS resource.

8. The method of claim 7, **characterized in that** the SRS resource indication information comprises first parameter indication information, and the first parameter indication information is used for indicating the first parameter corresponding to the at least two SRS resources.

9. The method of claim 1, **characterized in that** performing the PUSCH transmission based on the SRS resource indication information comprises:

determining a third SRS resource having an association relationship with at least one SRS resource in the multiple SRS resources indicated by the SRS resource indication information; and
performing PUSCH transmission based on at least one SRS resource indicated by the SRS resource indication information and the third SRS resource.

10. The method of any one of claims 1 to 3, **characterized in that** a transmission power used for each antenna port of SRSs of the at least two SRS resources is the same.

11. The method of any one of claims 1 to 3, **characterized in that** the SRS resource indication information indicates at least two SRS resources for the first transmission layer in a same SRS resource set; or
the SRS resource indication information indicates at least two SRS resources for the first transmission layer from the multiple SRS resource sets.

12. The method of claim 11, **characterized in that** in a case that the SRS resource indication information indicates at least two SRS resources for the first transmission layer from the multiple SRS resource sets, the SRS resource indication information indicates M SRS resources from the multiple SRS resource sets, and M is a positive integer.

13. The method of claim 11, **characterized in that** in a case that the SRS resource indication information indicates at least two SRS resources for the first transmission layer from the multiple SRS resource sets, SRS resource sets of the multiple SRS resource sets are SRS resource sets with a same usage type.

14. The method of claim 11, **characterized in that** in a case that the SRS resource indication information indicates at least two SRS resources for the first transmission layer from the multiple SRS resource sets, a fourth SRS resource and a fifth SRS resource in the at least two SRS resources are SRS resources with a same first parameter in different SRS resource sets; and the fourth SRS resource and the fifth SRS resource are any two SRS resources of the at least two SRS resources.

15. The method of claim 1, **characterized in that** the first transmission layer corresponds to at least two ports, and each of the at least two ports corresponds to one SRS resource of the at least two SRS resources.

16. The method of claim 15, **characterized in that** the at least two ports are PUSCH ports;
a first port of the at least two ports has a corresponding relationship with an antenna port of a first SRS resource of the at least two SRS resources; or a first port of the at least two ports is the same as an antenna port of a first SRS resource of the at least two SRS resources.

17. The method of claim 16, **characterized in that** within the at least two ports, an index of at least one port is determined based on a number of PUSCH ports of at least one other port; or within the at least two ports, an index of at least one port is determined based on a number of antenna ports of SRS resource corresponding to at least one other port.

18. The method of claim 1, **characterized in that** performing the PUSCH transmission based on the SRS resource indication information comprises:

performing PUSCH transmission based on the SRS resource indication information and precoding indication information; the precoding indication information is used for indicating a precoding matrix from a codebook with a number of antenna ports being equal to a sum of a number of antenna ports of the at least two SRS resources.

19. The method of claim 1, **characterized in that** performing the PUSCH transmission based on the SRS resource indication information comprises:
performing PUSCH transmission based on the SRS resource indication information and precoding indication information; the precoding indication information being used for indicating a precoding matrix corresponding to each of the multiple SRS resources.

20. The method of claim 19, **characterized in that** the precoding indication information comprises first precoding indication information and second precoding indication information; the first precoding indication information is used for indicating a first precoding matrix corresponding to a first port or a sixth SRS resource; the second precoding indication information is used for indicating a second precoding matrix corresponding to a second port or a seventh SRS resource; the sixth SRS resource and the seventh SRS resource are SRS resources of the multiple SRS resources; the first port or the second port is an antenna port corresponding to the PUSCH transmission.

21. The method of claim 20, **characterized in that** the first precoding indication information corresponds to a codebook with a number of antenna ports being equal to a number of antenna ports corresponding to the sixth SRS resource; the second precoding indication information corresponds to a codebook with a number of antenna ports being equal to a number of antenna ports corresponding to the seventh SRS resource.

22. The method of claim 19, **characterized in that** the precoding indication information comprises adjustment information of a precoding matrix corresponding to at least one port and/or at least one SRS resource, the at least one port is an antenna port of the antenna ports corresponding to the PUSCH transmission, and the at least one SRS resource is an SRS resource in the multiple SRS resources.

23. An uplink data transmission method, **characterized by** comprising:

sending sounding reference signal (SRS) resource indication information to a terminal device, the SRS resource indication information is used for indicating multiple SRS resources; and
receiving physical uplink shared channel (PUSCH) transmission transmitted based on the SRS resource indication information, wherein the PUSCH transmission comprises a first transmission layer; the first transmission layer corresponds to at least two SRS resources of the multiple SRS resources.

24. The method of claim 23, **characterized in that** each of the at least two SRS resources has a same number of antenna ports.

25. The method of claim 23, **characterized in that** in the multiple SRS resources, an index of antenna port of at least one SRS resource is determined based on a number of antenna ports of at least one other SRS resource.

26. The method of any one of claims 23 to 25, **characterized in that** a signaling carrying the SRS resource indication information comprises an information field, the information field is used for indicating the multiple SRS resources; or a signaling carrying the SRS resource indication information comprises multiple information fields; each of the multiple information fields is used for indicating one SRS resource in the multiple SRS resources.

27. The method of any one of claims 23 to 25, **characterized in that** the SRS resource indication information comprises SRS resource set indication information; and the SRS resource set indication information is used for indicating an SRS resource set corresponding to the multiple SRS resources.

28. The method of claim 27, **characterized in that** the SRS resource indication information further comprises first SRS resource indication information, and the first SRS resource indication information is used for indicating an SRS resource in the multiple SRS resources corresponding to an SRS resource set indicated by the SRS resource set indication information.

29. The method of any one of claims 23 to 25, **characterized in that** a first SRS resource and a second SRS resource in the at least two SRS resources have an association relationship; the first SRS resource and the second SRS resource are any two SRS resources in the at least two SRS resources;

the association relationship comprises one or more of the following items:

the first SRS resource and the second SRS resource corresponding to a same first parameter; the first SRS resource and the second SRS resource corresponding to different second parameters; or
the first SRS resource and the second SRS resource have a same index in respective SRS resource sets.

30. The method of claim 29, **characterized in that** the SRS resource indication information comprises first parameter indication information, and the first parameter indication information is used for indicating a first parameter corresponding to the at least two SRS resources.

31. The method of claim 23, **characterized in that** the PUSCH transmission is performed based on at least one SRS resource indicated by the SRS resource indication information and a third SRS resource; and the third SRS resource has an association relationship with at least one SRS resource of multiple SRS resources indicated by the SRS resource indication information.

32. The method of any one of claims 23 to 25, **characterized in that** a transmission power used for each antenna port of SRSs of the at least two SRS resources is the same.

33. The method of any one of claims 23 to 25, **characterized in that** the SRS resource indication information indicates at least two SRS resources for the first transmission layer from a same SRS resource set; or
the SRS resource indication information indicates at least two SRS resources for the first transmission layer in multiple SRS resource sets.

34. The method of claim 33, **characterized in that** in a case that the SRS resource indication information indicates at least two SRS resources for the first transmission layer from the multiple SRS resource sets, the SRS resource indication information indicates M SRS resources in the multiple SRS resource sets, and M is a positive integer.

35. The method of claim 33, **characterized in that** in a case that the SRS resource indication information indicates at least two SRS resources for the first transmission layer from the multiple SRS resource sets, SRS resource sets in the multiple SRS resource sets are SRS resource sets with a same usage type.

36. The method of claim 33, **characterized in that** in a case that the SRS resource indication information indicates at least two SRS resources for the first transmission layer from the multiple SRS resource sets, a fourth SRS resource and a fifth SRS resource of the at least two SRS resources are SRS resources with a same first parameter in different SRS resource sets; and the fourth SRS resource and the fifth SRS resource are any two SRS resources in the at least two SRS resources.

37. The method of claim 23, **characterized in that** the first transmission layer corresponds to at least two ports, and each of the at least two ports corresponds to one SRS resource of the at least two SRS resources.

38. The method of claim 37, **characterized in that** the at least two ports are PUSCH ports;
a first port of the at least two ports has a corresponding relationship with an antenna port of a first SRS resource of the at least two SRS resources; or a first port of the at least two ports is the same as an antenna port of a first SRS resource of the at least two SRS resources.

39. The method of claim 38, **characterized in that** within the at least two ports, the index of at least one port is determined based on the number of PUSCH ports of at least one other port; or within the at least two ports, an index of at least one port is determined based on a number of antenna ports of SRS resource corresponding to at least one other port.

40. The method of claim 23, **characterized in that** the method further comprises:
sending precoding indication information; the precoding indication information being used for indicating a precoding matrix from a codebook with a number of antenna ports being equal to a sum of a number of antenna ports of the at least two SRS resources.

41. The method of claim 23, **characterized in that** the method further comprises:
transmitting precoding indication information; the precoding indication information being used for indicating a precoding matrix corresponding to each of the multiple SRS resources.

42. The method of claim 41, **characterized in that** the precoding indication information comprises first precoding indication information and second precoding indication information; the first precoding indication information is used for indicating a first precoding matrix corresponding to a first port or a sixth SRS resource; the second precoding indication information is used for indicating a second precoding matrix corresponding to a second port or a seventh SRS resource; the sixth SRS resource and the seventh SRS resource are SRS resources of the multiple SRS resources; the first port or the second port is an antenna port corresponding to the PUSCH transmission.

43. The method of claim 42, **characterized in that** the first precoding indication information corresponds to a codebook with a number of antenna ports being equal to a number of antenna ports corresponding to the sixth SRS resource; the second precoding indication information corresponds to a codebook with a number of antenna ports being equal to a number of antenna ports corresponding to the seventh SRS resource.

44. The method of claim 41, **characterized in that** the precoding indication information comprises adjustment information of a precoding matrix corresponding to at least one port and/or at least one SRS resource, the at least one port is an antenna port of the antenna ports corresponding to the PUSCH transmission, and the at least one SRS resource is an SRS resource in the multiple SRS resources.

45. A terminal device, **characterized by** comprising a memory, a transceiver and a processor,
the memory is used for storing a computer program;

the transceiver is used for sending and receiving data under control of the processor;
the processor is used for reading the computer program in the memory and performing:

controlling the transceiver to receive sounding reference signal (SRS) resource indication information, the SRS resource indication information is used for indicating multiple SRS resources; and
controlling the transceiver to perform physical uplink shared channel (PUSCH) transmission, wherein the PUSCH transmission comprises a first transmission layer; the first transmission layer corresponds to at least two SRS resources of the multiple SRS resources.

46. The terminal device of claim 45, **characterized in that** each of the at least two SRS resources has a same number of antenna ports.

47. The terminal device of claim 45, **characterized in that** in the multiple SRS resources, an index of antenna port of at least one SRS resource is determined based on a number of antenna ports of at least one other SRS resource.

48. The terminal device of any one of claims 45 to 47, **characterized in that** a signaling carrying the SRS resource indication information comprises an information field, the information field is used for indicating the multiple SRS resources; or
a signaling carrying the SRS resource indication information comprises multiple information fields; each of the multiple information fields is used for indicating one SRS resource in the multiple SRS resources.

49. The terminal device of any one of claims 45 to 47, **characterized in that** the SRS resource indication information comprises SRS resource set indication information; and the SRS resource set indication information is used for indicating an SRS resource set corresponding to the multiple SRS resources.

50. The terminal device of claim 49, **characterized in that** the SRS resource indication information further comprises first SRS resource indication information, and the first SRS resource indication information is used for indicating an SRS resource in the multiple SRS resources corresponding to an SRS resource set indicated by the SRS resource set indication information.

51. The terminal device of any one of claims 45 to 47, **characterized in that** a first SRS resource and a second SRS resource in the at least two SRS resources have an association relationship; the first SRS resource and the second SRS resource are any two SRS resources in the at least two SRS resources;
the association relationship comprises one or more of the following items:

the first SRS resource and the second SRS resource corresponding to a same first parameter; the first SRS resource and the second SRS resource corresponding to different second parameters; or
the first SRS resource and the second SRS resource have a same index in respective SRS resource sets.

**52.** The terminal device of claim 51, **characterized in that** the SRS resource indication information comprises first parameter indication information, and the first parameter indication information is used for indicating a first parameter corresponding to the at least two SRS resources.

**53.** The terminal device of claim 52, **characterized in that** the processor is used for:

determining a third SRS resource having an association relationship with at least one SRS resource of multiple SRS resources indicated by the SRS resource indication information; and
controlling the transceiver to perform PUSCH transmission based on at least one SRS resource indicated by the SRS resource indication information and the third SRS resource.

**54.** The terminal device of any one of claims 45 to 47, **characterized in that** a transmission power used for each antenna port of SRSs of the at least two SRS resources is the same.

**55.** The terminal device of any one of claims 45 to 47, **characterized in that** the SRS resource indication information indicates at least two SRS resources for the first transmission layer from a same SRS resource set; or
the SRS resource indication information indicates at least two SRS resources for the first transmission layer in multiple SRS resource sets.

**56.** The terminal device of claim 55, **characterized in that** in a case that the SRS resource indication information indicates at least two SRS resources for the first transmission layer in multiple SRS resource sets, the SRS resource indication information indicates M SRS resources in the multiple SRS resource sets, and M is a positive integer.

**57.** The terminal device of claim 55, **characterized in that** in a case that the SRS resource indication information indicates at least two SRS resources for the first transmission layer in multiple SRS resource sets, SRS resource sets in the multiple SRS resource sets are SRS resource sets with a same usage type.

**58.** The terminal device of claim 55, **characterized in that** in a case that the SRS resource indication information indicates at least two SRS resources for the first transmission layer in multiple SRS resource sets, a fourth SRS resource and a fifth SRS resource in the at least two SRS resources are SRS resources with a same first parameter in different SRS resource sets; and the fourth SRS resource and the fifth SRS resource are any two SRS resources in the at least two SRS resources.

**59.** The terminal device of claim 45, **characterized in that** the first transmission layer corresponds to at least two ports, and each of the at least two ports corresponds to one SRS resource in the at least two SRS resources.

**60.** The terminal device of claim 59, **characterized in that** the at least two ports are PUSCH ports;
a first port of the at least two ports has a corresponding relationship with an antenna port of a first SRS resource of the at least two SRS resources; or a first port of the at least two ports is the same as an antenna port of a first SRS resource of the at least two SRS resources.

**61.** The terminal device of claim 60, **characterized in that** within at least two ports, an index of at least one port is determined based on a number of PUSCH ports of at least one other ports; or within at least two ports, an index of at least one port is determined based on a number of antenna ports of an SRS resource corresponding to at least one other ports.

**62.** The terminal device of claim 45, **characterized in that** the processor is used for:
controlling the transceiver to perform the PUSCH transmission based on the SRS resource indication information and precoding indication information; the precoding indication information is used for indicating a precoding matrix from a codebook with a number of antenna ports being equal to a sum of a number of antenna ports of the at least two SRS resources.

**63.** The terminal device of claim 45, **characterized in that** the processor is used for:
controlling the transceiver to perform the PUSCH transmission based on the SRS resource indication information and precoding indication information; the precoding indication information being used for indicating a precoding matrix corresponding to each of the multiple SRS resources.

**64.** The terminal device of claim 63, **characterized in that** the precoding indication information comprises first precoding indication information and second precoding indication information; the first precoding indication information is used for indicating a first precoding matrix corresponding to a first port or a sixth SRS resource; the second precoding indication information is used for indicating a second precoding matrix corresponding to a second port or a seventh SRS resource; the sixth SRS resource and the seventh SRS resource are SRS resources of the multiple SRS resources; the first port or the second port is an antenna port corresponding to the PUSCH transmission.

65. The terminal device of claim 64, **characterized in that** the first precoding indication information corresponds to a codebook with a number of antenna ports being equal to a number of antenna ports corresponding to the sixth SRS resource; the second precoding indication information corresponds to a codebook with a number of antenna ports being equal to a number of antenna ports corresponding to the seventh SRS resource.

66. The terminal device of claim 63, **characterized in that** the precoding indication information comprises adjustment information for a precoding matrix corresponding to at least one port and/or at least one SRS resource, the at least one port is an antenna port of the antenna ports corresponding to the PUSCH transmission, and the at least one SRS resource is an SRS resource in the multiple SRS resources.

67. A network device, **characterized by** comprising a memory, a transceiver and a processor,

the memory is used for storing a computer program;
the transceiver is used for transmitting and receiving data under control of the processor;
the processor is used for reading the computer program in the memory and performing:

sending sounding reference signal (SRS) resource indication information to a terminal device through the transceiver, the SRS resource indication information is used for indicating multiple SRS resources; and receiving physical uplink shared channel (PUSCH) transmission transmitted based on the SRS resource indication information through the transceiver, wherein the PUSCH transmission comprises a first transmission layer; the first transmission layer corresponds to at least two SRS resources of the multiple SRS resources.

68. The network device of claim 67, **characterized in that** each of the at least two SRS resources has a same number of antenna ports.

69. The network device of claim 67, **characterized in that** in the multiple SRS resources, an index of antenna port of at least one SRS resource is determined based on a number of antenna ports of at least one other SRS resource.

70. The network device of any one of claims 67 to 69, **characterized in that** a signaling carrying the SRS resource indication information comprises an information field, the information field is used for indicating the multiple SRS resources; or
a signaling carrying the SRS resource indication information comprises multiple information fields; each of the multiple information fields is used for indicating one SRS resource in the multiple SRS resources.

71. The network device of any one of claims 67 to 69, **characterized in that** the SRS resource indication information comprises SRS resource set indication information; and the SRS resource set indication information is used for indicating an SRS resource set corresponding to the multiple SRS resources.

72. The network device of claim 71, **characterized in that** the SRS resource indication information further comprises first SRS resource indication information, and the first SRS resource indication information is used for indicating an SRS resource in the multiple SRS resources corresponding to an SRS resource set indicated by the SRS resource set indication information.

73. The network device of any one of claims 67 to 69, **characterized in that** a first SRS resource and a second SRS resource in the at least two SRS resources have an association relationship; the first SRS resource and the second SRS resource are any two SRS resources in the at least two SRS resources;
the association relationship comprises one or more of the following items:

the first SRS resource and the second SRS resource corresponding to a same first parameter; the first SRS resource and the second SRS resource corresponding to different second parameters; or
the first SRS resource and the second SRS resource have a same index in respective SRS resource sets.

**74.** The network device of claim 73, **characterized in that** the SRS resource indication information comprises first parameter indication information, and the first parameter indication information is used for indicating a first parameter corresponding to the at least two SRS resources.

**75.** The network device of claim 67, **characterized in that** the PUSCH transmission is performed based on at least one SRS resource indicated by the SRS resource indication information and a third SRS resource; and the third SRS resource has an association relationship with at least one SRS resource of multiple SRS resources indicated by the SRS resource indication information.

**76.** The network device of any one of claims 67 to 69, **characterized in that** a transmission power used for each antenna port of SRSs of the at least two SRS resources is the same.

**77.** The network device of any one of claims 67 to 69, **characterized in that** the SRS resource indication information indicates at least two SRS resources for the first transmission layer from a same SRS resource set; or
the SRS resource indication information indicates at least two SRS resources for the first transmission layer in multiple SRS resource sets.

**78.** The network device of claim 77, **characterized in that** in a case that the SRS resource indication information indicates at least two SRS resources for the first transmission layer in multiple SRS resource sets, the SRS resource indication information indicates M SRS resources in the multiple SRS resource sets, and M is a positive integer.

**79.** The network device of claim 77, **characterized in that** in a case that the SRS resource indication information indicates at least two SRS resources for the first transmission layer in multiple SRS resource sets, SRS resource sets in the multiple SRS resource sets are SRS resource sets with a same usage type.

**80.** The network device of claim 77, **characterized in that** in a case that the SRS resource indication information indicates at least two SRS resources for the first transmission layer in multiple SRS resource sets, a fourth SRS resource and a fifth SRS resource in the at least two SRS resources are SRS resources with a same first parameter in different SRS resource sets; and the fourth SRS resource and the fifth SRS resource are any two SRS resources in the at least two SRS resources.

**81.** The network device of claim 67, **characterized in that** the first transmission layer corresponds to at least two ports, and each of the at least two ports corresponds to one SRS resource in the at least two SRS resources.

**82.** The network device of claim 81, **characterized in that** the at least two ports are PUSCH ports;
a first port of the at least two ports has a corresponding relationship with an antenna port of a first SRS resource of the at least two SRS resources; or a first port of the at least two ports is the same as an antenna port of a first SRS resource of the at least two SRS resources.

**83.** The network device of claim 82, **characterized in that** within at least two ports, an index of at least one port is determined based on a number of PUSCH ports of at least one other ports; or within at least two ports, an index of at least one port is determined based on a number of antenna ports of an SRS resource corresponding to at least one other ports.

**84.** The network device of claim 67, **characterized in that** the processor is used for:
controlling the transceiver to transmit precoding indication information; the precoding indication information is used for indicating a precoding matrix from a codebook with a number of antenna ports being equal to a sum of a number of antenna ports of the at least two SRS resources.

**85.** The network device of claim 67, **characterized in that** the processor is used for:
controlling the transceiver to transmit precoding indication information; the precoding indication information being used for indicating a precoding matrix corresponding to each of the multiple SRS resources.

**86.** The network device of claim 85, **characterized in that** the precoding indication information comprises first precoding indication information and second precoding indication information; the first precoding indication information is used for indicating a first precoding matrix corresponding to a first port or a sixth SRS resource; the second precoding indication information is used for indicating a second precoding matrix corresponding to a second port or a seventh SRS resource; the sixth SRS resource and the seventh SRS resource are SRS resources of the multiple SRS resources; the first port or the second port is an antenna port corresponding to the PUSCH transmission.

87. The network device of claim 86, **characterized in that** the first precoding indication information corresponds to a codebook with a number of antenna ports being equal to a number of antenna ports corresponding to the sixth SRS resource; the second precoding indication information corresponds to a codebook with a number of antenna ports being equal to a number of antenna ports corresponding to the seventh SRS resource.

88. The network device of claim 85, **characterized in that** the precoding indication information comprises adjustment information for a precoding matrix corresponding to at least one port and/or at least one SRS resource, the at least one port is an antenna port of the antenna ports corresponding to the PUSCH transmission, and the at least one SRS resource is an SRS resource in the multiple SRS resources.

89. A terminal device, **characterized by** comprising:

a first receiving unit, configured to receive sounding reference signal (SRS) resource indication information, the SRS resource indication information is used for indicating multiple SRS resources; and
an uplink transmission unit, configured to perform physical uplink shared channel (PUSCH) transmission based on the SRS resource indication information, **characterized in that** the PUSCH transmission comprises a first transmission layer; the first transmission layer corresponds to at least two SRS resources of the multiple SRS resources.

90. A network device, **characterized by** comprising:

a sending unit, configured to send sounding reference signal (SRS) resource indication information to a terminal device, the SRS resource indication information is used for indicating multiple SRS resources; and
a second receiving unit, configured to receive physical uplink shared channel (PUSCH) transmission transmitted based on the SRS resource indication information, wherein the PUSCH transmission comprises a first transmission layer; the first transmission layer corresponds to at least two SRS resources of the multiple SRS resources.

91. A computer readable storage medium, **characterized in that** the computer-readable storage medium stores a computer program, and the computer program, when executed by a processor, performs a method of any one of claims 1 to 17 or a method of any one of claims 23 to 44.

network device
103

Uu interface

Uu interface

terminal device
102

terminal device
101

**FIG. 1**

receiving SRS resource indication information

S201

performing PUSCH transmission based on the SRS resource indication information

S202

**FIG. 2**

```
┌─────────────────────────────────────────────────────────┐
│                                                         │      S301
│   receiving the SRS resource indication information     │   ⌐
│   and the precoding indication information              │
│                                                         │
└─────────────────────────────────────────────────────────┘
                            │
                            ▼
┌─────────────────────────────────────────────────────────┐
│                                                         │      S302
│   determining a number of antenna ports included in    │   ⌐
│   the SRS resource indicated by the SRS resource        │
│   indication information based on the SRS               │
│   resource indication information                       │
└─────────────────────────────────────────────────────────┘
                            │
                            ▼
┌─────────────────────────────────────────────────────────┐
│                                                         │      S303
│   determining a precoding matrix corresponding to the   │   ⌐
│   first transmission layer based on the precoding       │
│   indication information and a codebook with a number   │
│   of antenna ports being equal to a sum of numbers of   │
│   antenna ports corresponding to the at least two SRS   │
│   resources                                             │
└─────────────────────────────────────────────────────────┘
                            │
                            ▼
┌─────────────────────────────────────────────────────────┐
│                                                         │      S304
│                                                         │   ⌐
│            performing PUSCH transmission                │
│                                                         │
└─────────────────────────────────────────────────────────┘
```

**FIG. 3**

```
┌─────────────────────────────────────────────────────────┐
│ receiving the SRS resource indication information and the │  S401
│                precoding indication information           │
└─────────────────────────────────────────────────────────┘
                            │
                            ▼
┌─────────────────────────────────────────────────────────┐
│ determining a number of antenna ports included in the SRS │  S402
│ resource indicated by the SRS resource indication         │
│ information based on the SRS resource indication          │
│ information                                               │
└─────────────────────────────────────────────────────────┘
                            │
                            ▼
┌─────────────────────────────────────────────────────────┐
│ determining a first precoding matrix based on first       │
│ precoding indication information and a codebook with a     │
│ number of antenna ports being equal to a number of        │
│ antenna ports corresponding to a sixth SRS resource,      │  S403
│ determining a second precoding matrix based on second     │
│ precoding indication information and a codebook with a     │
│ number of antenna ports being equal to a number of        │
│ antenna ports corresponding to a seventh SRS resource,    │
│ and determining a precoding matrix corresponding to the   │
│ first transmission layer                                  │
└─────────────────────────────────────────────────────────┘
                            │
                            ▼
┌─────────────────────────────────────────────────────────┐
│                                                           │  S404
│              performing PUSCH transmission                │
│                                                           │
└─────────────────────────────────────────────────────────┘
```

**FIG. 4**

```
┌─────────────────────────────────────────────────────────┐
│                                                           │  S501
│          sending SRS resource indication information      │
│                                                           │
└─────────────────────────────────────────────────────────┘
                            │
                            ▼
┌─────────────────────────────────────────────────────────┐
│                                                           │  S502
│   receiving PUSCH transmission transmitted based on the   │
│          SRS resource indication information               │
└─────────────────────────────────────────────────────────┘
```

**FIG. 5**

network device

terminal device

S601 sending SRS resource indication information
and precoding indication information

receiving the SRS resource indication information and the
precoding indication information

S602

performing PUSCH transmission based on the SRS resource
indication information and the precoding indication information

S603

data/signal

receiving the PUSCH transmission
transmitted from the terminal device

S604

**FIG. 6**

first receiving unit

S701

uplink transmission unit

S702

**FIG. 7**

| sending unit | S801 |

| second receiving unit | S802 |

**FIG. 8**

| processor | 901 |   | memory | 902 |

| bus interface | ⟷ | transceiver | 903 |

**FIG. 9**

| processor | 1001 |   | memory | 1002 |

| bus interface | ⟷ | transceiver | 1003 |

**FIG. 10**

## INTERNATIONAL SEARCH REPORT

International application No.

**PCT/CN2023/090001**

| A. | CLASSIFICATION OF SUBJECT MATTER |
|---|---|

H04W72/12(2023.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, EPTXT, WOTXT, USTXT, CNKI, 3GPP: 传输层, 传输流, 传送层, 大于, 对应, 多个, 两个, 同时, 映射, layer, multi, several, SRS, correspond, map, more than, transport, transmission

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 109150439 A (CHINA ACADEMY OF TELECOMMUNICATIONS TECHNOLOGY) 04 January 2019 (2019-01-04) description, paragraphs [0088]-[0231] | 1-91 |
| X | WO 2022000262 A1 (ZTE CORPORATION) 06 January 2022 (2022-01-06) description, page 4 paragraph 2 to page 18 paragraph 4 | 1-91 |
| A | CN 113316950 A (GUANGDONG OPPO MOBILE COMMUNICATIONS CO., LTD.) 27 August 2021 (2021-08-27) entire document | 1-91 |
| A | WO 2020220330 A1 (GUANGDONG OPPO MOBILE COMMUNICATIONS CO., LTD.) 05 November 2020 (2020-11-05) entire document | 1-91 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 July 2023** | **20 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/090001**

| Patent document cited in search report | | | Publication date (day/month/year) | Patent family member(s) | | | Publication date (day/month/year) |
|---|---|---|---|---|---|---|---|
| CN | 109150439 | A | 04 January 2019 | TW | 201906360 | A | 01 February 2019 |
| | | | | TWI | 679871 | B | 11 December 2019 |
| | | | | EP | 3629510 | A1 | 01 April 2020 |
| | | | | EP | 3629510 | A4 | 03 June 2020 |
| | | | | EP | 3629510 | B1 | 04 May 2022 |
| | | | | JP | 2023025118 | A | 21 February 2023 |
| | | | | WO | 2018228195 | A1 | 20 December 2018 |
| | | | | KR | 20200016381 | A | 14 February 2020 |
| | | | | KR | 102328004 | B1 | 17 November 2021 |
| | | | | JP | 2020523932 | A | 06 August 2020 |
| | | | | JP | 7241707 | B2 | 17 March 2023 |
| | | | | US | 2020213979 | A1 | 02 July 2020 |
| | | | | US | 11304187 | B2 | 12 April 2022 |
| WO | 2022000262 | A1 | 06 January 2022 | CN | 115804187 | A | 14 March 2023 |
| CN | 113316950 | A | 27 August 2021 | WO | 2020155179 | A1 | 06 August 2020 |
| WO | 2020220330 | A1 | 05 November 2020 | CN | 112236966 | A | 15 January 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210432278